(19) Europäisches Patentamt
European Patent Office
Office européen des brevets

(11) **EP 2 712 186 A1**

(12) **EUROPEAN PATENT APPLICATION**
published in accordance with Art. 153(4) EPC

(43) Date of publication:
**26.03.2014 Bulletin 2014/13**

(51) Int Cl.:
**H04N 7/173** (2011.01)   **H04B 1/16** (2006.01)

(21) Application number: **12786604.4**

(22) Date of filing: **18.05.2012**

(86) International application number:
**PCT/JP2012/062811**

(87) International publication number:
**WO 2012/157756 (22.11.2012 Gazette 2012/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.05.2011   JP 2011112490**
**19.05.2011   JP 2011112491**

(71) Applicant: **Nippon Hoso Kyokai**
**Tokyo 150-8001 (JP)**

(72) Inventors:
• **MITSUYA, Shigeaki**
**Tokyo 157-8510 (JP)**
• **MATSUMURA, Kinji**
**Tokyo 157-8510 (JP)**

• **BABA, Akitsugu**
**Tokyo 157-8510 (JP)**
• **FUJISAWA, Hiroshi**
**Tokyo 157-8510 (JP)**
• **TAKECHI, Masaru**
**Tokyo 157-8510 (JP)**
• **KANATSUGU, Yasuaki**
**Tokyo 157-8510 (JP)**
• **HAMADA, Hiroyuki**
**Tokyo 157-8510 (JP)**

(74) Representative: **Tischner, Oliver**
**Lavoix Munich**
**Bayerstrasse 83**
**80335 München (DE)**

(54) **RECEIVER**

(57)     A receiver includes: an application information acquiring unit that acquires an AIT for carousel transmission; an application requesting unit that provides, based on an application control code, an application request signal to a receiver application server associated with a location indicated by location information; an application acquiring unit that acquires an application transmitted from the receiver application server; an application execution unit that executes the acquired application; a content requesting unit that provides, along with execution of the application, a content request signal to a content delivery server that stores content data associated with the application; and a content acquiring unit that acquires content data transmitted from the content delivery server.

FIG. 1

**Description**

TECHNICAL FIELD

The present invention relates to a receiver.
Priority is claimed on Japanese Patent Applications No. 2011-112490 and No. 2011-112491, which were filed on May 19, 2011, the content of which is incorporated herein by reference.

BACKGROUND ART

Recently, a study for implementing cooperative communication/broadcasting services has been made. As an example, the cooperative communication/broadcasting services are services in which a receiver used by a viewer receives broadcasting program content broadcast from a broadcasting station side and delivering content delivered from a service organization side via an electric communication line, such as the Internet, and cooperatively plays back those broadcasting program content and delivering content.
The receiver can receive the cooperative communication/broadcasting services by executing an application for displaying the broadcasting program content and the delivering content and outputting the sound thereof.
Conventionally, application execution platforms for digital broadcasting have been standardized and used (see, for example, Non-Patent Document 1)

CITATION LIST

[Non-Patent Document]

[Non-Patent Document 1] "APPLICATION EXCECUTION ENGINE PLATFORM FOR DIGITAL BROADCASTING", ARIB STD-B23, V1.2, Application of Radio Industries and Businesses, July 2009

DISCLOSURE OF INVENTION

Problems to be Solved by the Invention

Regarding the cooperative communication/broadcasting services, there has been no established system in which a receiver acquires, in accordance with a request of the receiver, an application to be executed by the receiver and delivering content related to that application.
The present invention has been made in view of the above situations, an object of which is to provide a receiver that can acquire from an external provider, in accordance with a request of the receiver, an application to be executed and content data related to that application.

Means for Solving the Problems

[1] To solve the above problem, a receiver according to one embodiment of the present invention includes: an application information acquiring unit configured to acquire from data broadcasting content of a data broadcast repeatedly received, an application information table including an application control code for controlling a life cycle of an application for a cooperative communication/broadcasting service and location information of the application; an application requesting unit configured to provide, based on the application control code acquired by the application information acquiring unit, an application request signal to an external application server associated with a location indicated by the location information; an application acquiring unit configured to acquire an application transmitted from the application server based on the application request signal provided by the application requesting unit; an application execution unit configured to execute the application acquired by the application acquiring unit; a content requesting unit configured to provide, along with execution of the application by the application execution unit, a content request signal to an external content delivery server that stores content data associated with the application; and a content acquiring unit configured to acquire the content data transmitted from the content delivery server based on the content request signal provided by the content requesting unit.
[2] Additionally, a receiver according to another embodiment of the present invention includes: an application information acquiring unit configured to acquire from an event information table included in a broadcast stream being received, an application information table including an application control code for controlling a life cycle of an application for a cooperative communication/broadcasting service and location information of the application; an application requesting unit configured to provide, based on the application control code acquired by the application information acquiring unit, an application request signal to an external application server associated with a location indicated by the location information; an application acquiring unit configured to acquire an application transmitted from the application server based on the application request signal provided by the application requesting unit; an application execution unit configured to execute the application acquired by the application acquiring unit; a content requesting unit configured to provide, along with execution of the application by the application execution unit, a content request signal to an external content delivery server that stores content data associated with the application; and a content acquiring unit configured to acquire the content data transmitted from the content delivery server based on the content request signal provided by the content requesting unit.

[3] Further, a reception method according to another embodiment of the present invention includes: acquiring from data broadcasting content of a data broadcast repeatedly received, an application information table including an application control code for controlling a life cycle of an application for a cooperative communication/broadcasting service and location information of the application; providing, based on the application control code, an application request signal to an external application server associated with a location indicated by the location information; acquiring an application transmitted from the application server based on the application request signal; executing the application; providing, along with execution of the application, a content request signal to an external content delivery server that stores content data associated with the application; and acquiring the content data transmitted from the content delivery server based on the content request signal.

[4] Moreover, a reception method according to another embodiment of the present invention includes: acquiring from an event information table included in a broadcast stream being received, an application information table including an application control code for controlling a life cycle of an application for a cooperative communication/broadcasting service and location information of the application; providing, based on the application control code, an application request signal to an external application server associated with a location indicated by the location information; acquiring an application transmitted from the application server based on the application request signal; executing the application; providing, along with execution of the application, a content request signal to an external content delivery server that stores content data associated with the application; and acquiring the content data transmitted from the content delivery server based on the content request signal.

Effects of the Invention

According to the aspects of the present invention, a receiver can acquire from an external provider, in accordance with a request of the receiver, an application to be executed and content data related to that application.

BRIEF DESCRIPTION OF THE DRAWINGS

FIG. 1 is a block diagram illustrating a functional configuration of a receiver that is an embodiment of the present invention.
FIG. 2 is a diagram illustrating users of a cooperative communication/broadcasting system to which the present invention is applied and relationships thereamong.
FIG. 3 is a diagram illustrating the entire configuration of the cooperative communication/broadcasting system.
FIG. 4 is a diagram illustrating a terminal cooperation model of the cooperative broadcasting/communication system.
FIG. 5 is a conceptual diagram illustrating types of service in the cooperative broadcasting/communication system.
FIG. 6 is a diagram illustrating an example of a text expression of an AIT used for the cooperative broadcasting/communication system.
FIG. 7 is a diagram illustrating a life cycle of an application used in the cooperative broadcasting/communication system.
FIG. 8 is a diagram illustrating flow of data between organizations in the cooperative communication/broadcasting system.
FIG. 9 is a diagram illustrating flow of data in the entire cooperative communication/broadcasting system.
FIG. 10 is a diagram illustrating a sequence of a recommendation service in the cooperative broadcasting/communication system.
FIG. 11 is a diagram illustrating a transfer protocol stack in the cooperative broadcasting/communication system.
FIG. 12 illustrates an application management model in the cooperative communication/broadcasting system.

FIG. 13 illustrates a functional model of a secure manager in the cooperative broadcasting/communication system.

FIG. 14 is a diagram illustrating concept of a window presentation control method in the cooperative broadcasting/communication system.

FIG. 15 is a diagram illustrating a basic operational model of a window presentation control in the cooperative broadcasting/communication system.

FIG. 16 illustrates an example of a window presentation control in accordance with the policy level in the cooperative broadcasting/communication system.

FIG. 17 illustrates an example of a presentation control at the time of a receipt of emergency earthquake report in the cooperative broadcasting/communication system.

FIG. 18 is a diagram illustrating the entire configuration of a cooperative communication/broadcasting system according to an embodiment of the present invention.

FIG. 19 is a functional block diagram illustrating an internal configuration of a receiver according to the embodiment.

FIG. 20 is a block diagram illustrating a detailed configuration of an application execution control unit according to the embodiment.

FIG. 21 is a block diagram illustrating a detailed configuration of a presentation control unit according to the embodiment.

FIG. 22 is a schematic diagram illustrating a front outer shape in a case where an infrared remote controller is used as an operation reception unit in an embodiment of the present invention.

FIG. 23 is a sequence chart illustrating a procedure of a process among a receiver according to the embodiment, a receiver application server, and a content delivery server.

FIG. 24 is a flowchart illustrating an operational procedure of operation in a case where the receiver according to the embodiment operates in accordance with an operation of the operation reception unit.

FIG. 25 is a flowchart illustrating an operational procedure of operation in a case where the receiver according to the embodiment operates in accordance with an operation of the operation reception unit.

FIG. 26 is a flowchart illustrating an operational procedure of operation of the receiver according to the embodiment.

FIG. 27 is a diagram illustrating a data structure of an event information table.

BEST MODE FOR CARRYING OUT THE INVENTION

Hereinafter, embodiments of the present invention are explained with reference to drawings.

An embodiment of the present invention is a receiver that can, by a simple operation, switch between a state of receiving only a broadcasting service and a state of receiving a stream dependent service that is one of plurality of service types of cooperative communication/broadcasting services. Additionally, the present embodiment is a receiver that can switch the currently received cooperative communication/broadcasting service to a broadcasting service by a control from a cooperative communication/broadcasting service provider side. Further, the present embodiment is a receiver that can acquire from an external provider, in accordance with a request of the receiver, an application to be executed in the cooperative communication/broadcasting service and content data related to that application.

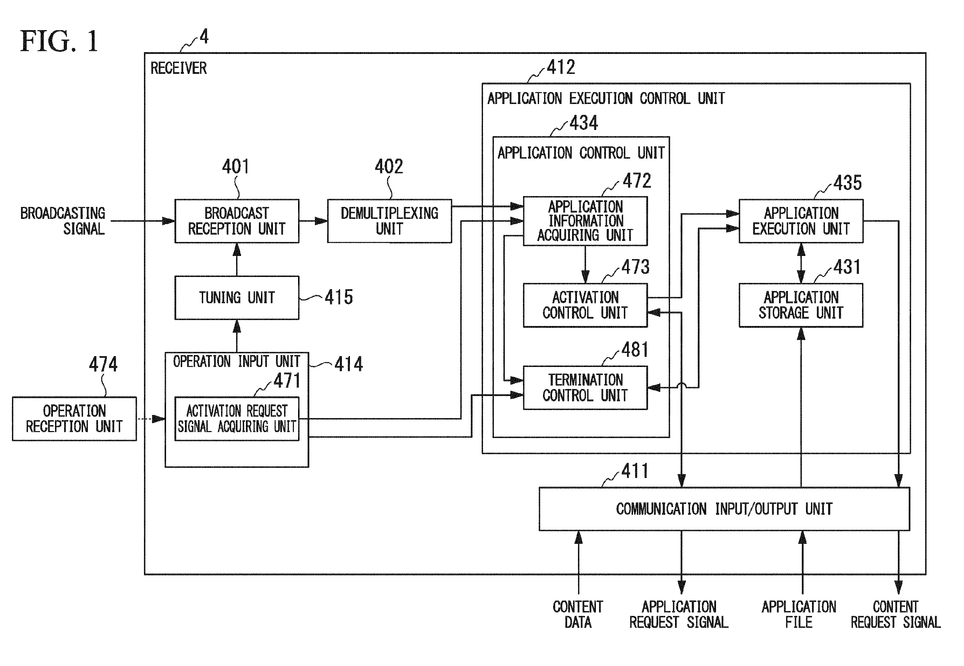

FIG. 1 is a block diagram illustrating a functional configuration of a receiver that is an embodiment of the present invention.

As shown in FIG. 1, a receiver 4 includes: a broadcast reception unit 401; a demultiplexing unit 402; a communication input/output unit 411; an application execution control unit 412; an operation input unit 414; a tuning unit 415; and an operation reception unit 474.

The application execution control unit 412 includes: an application storage unit 431; an application control unit 434; and an application execution unit 435.

The application control unit 434 includes: an application information acquiring unit 472; an activation control unit 473; and a termination control unit 481.

The operation input unit 414 includes an activation request signal acquiring unit 471.

[Explanation Of Cooperative Communication/Broadcasting System To Which Present Invention Is Applied]

Here, a cooperative communication/broadcasting system to which the present invention is applied is explained. The cooperative communication/broadcasting system (communication broadcasting integrated system, communication broadcasting system, transmission and reception system) to which the present invention is applied is, for example, a Hybridcast (trademark) system, which provides cooperative communication/broadcasting services (Hybridcast (trademark) services, communication broadcasting integrated services, communication broadcasting services). Regarding cooperative communication/broadcasting services implemented by the cooperative communication/broadcasting system to which the present invention is applied, digital broadcasting services cooperate with communication services via the Internet or the like. Regarding cooperative communication/broadcasting services, for example, a receiver, such as a digital television, a personal computer, or a mobile terminal simultaneously displays on a window for a broadcasting program (hereinafter, also described as "a program") transmitted by broadcasting (hereinafter, also described as "a broadcast window" of display windows for a program), a window for a service or content (hereinafter, also described as "an application window" or "a display window for an application") that an application installed in that receiver acquires by communication.

[1. System Model]

[1.1 Users Of Cooperative Communication/Broadcasting System]

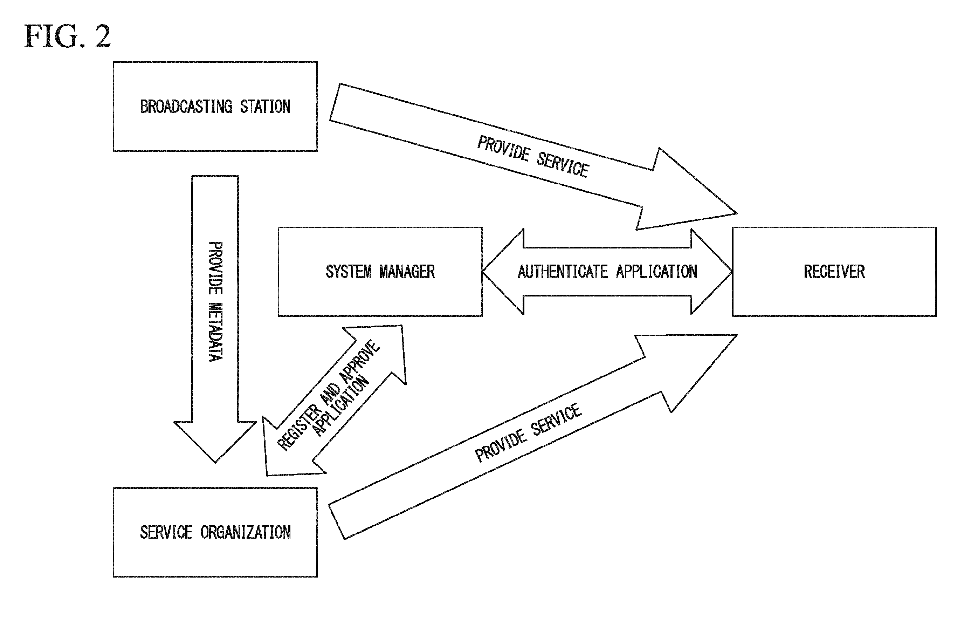

FIG. 2 is a diagram illustrating users of a cooperative communication/broadcasting system and relationships thereamong.

A broadcasting station that sends programs, which need organization, delivers to viewers, programs by means of broadcasting electric waves or via communication networks. In order to fulfill cooperative communication/broadcasting services, the broadcasting station provides metadata related to programs to a service organization.

The service organization that provides cooperative communication/broadcasting services produces and delivers content and applications (hereinafter, also described as "appli") for providing communication/broadcasting services to viewers. Hereinafter, a simply described "application" means an application for providing a cooperative communication/broadcasting service (an application for a cooperative communication/broadcasting service). A producer and a deliverer of content or an application need not be the same service organization. The broadcasting station may be the service organization. The service organization can provide information concerning links to other service organizations. To show that an application to be provided is a formal application, the service organization can apply a registration of the application to a system manager and acquire an approval therefrom. The approved application is not subjected to any operational limitations on the receiver. On the other hand, a window for displaying an unauthorized application cannot overlap a window for a program and the sound thereof, but can be displayed outside a window for a broadcast program by reducing the size of the window for the application. An approved application is referred to as an A (authorized) application. An unapproved application is referred to as a general application. Here, the A application is also referred to as a formal application, a registered application, an already-authorized application, a certified application, an official application, an authorized application, or an A (authorized)-type application. Additionally, the general application is also referred to as an informal application, an unauthorized application, an uncertified application, an unofficial application, a U (unauthorized)-type application, or a U application.

The system manager is an agent that certifies that an application to be provided to a viewer (receiver application) is an A application (formal). The system manager determines whether or not to approve the applied application if the right of the determination is delegated from the broadcasting station.

Applications for performing various settings may be installed in the receiver. In this case, a window for the application on the receiver may overlap a window for a program (video image).

A viewer who views a program broadcast by the broadcasting station receives cooperative communication/broadcasting services. The viewer can download and activate applications with will. Additionally, the viewer can overlap a window for an application on a window for a program (video image).

[1.2 System Configuration Of Cooperative Communication/Broadcasting System]

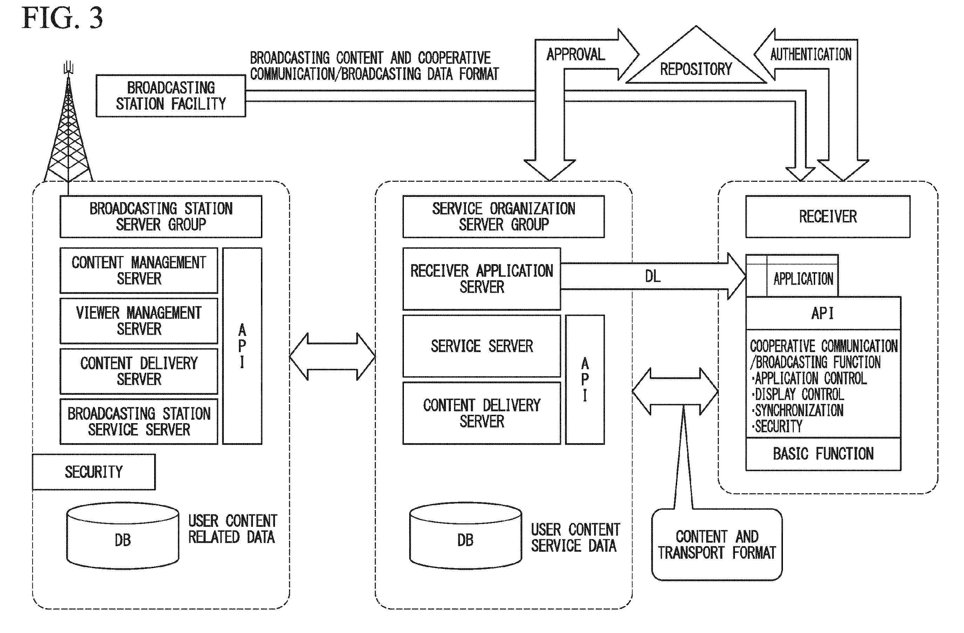

FIG. 3 is a diagram illustrating the entire configuration of the cooperative communication/broadcasting system. The cooperative communication/broadcasting system is configured such that "a broadcasting station server group", "a service organization server group", and "a receiver" are functionally added to the existing broadcasting facility using electric waves.

The broadcasting station owns a broadcasting facility. Further, broadcasting stations constitute, manage, and operate the broadcasting station server group, or both the broadcasting station server group and the service organization server group. Additionally, service organizations constitute, manage, and operate the service organization server group. The system manager manages and operates a repository server. A receiver manufacturer manufactures and sells receivers. A viewer owns a receiver and receives cooperative communication/broadcasting services.

A receiver (Hybridcast (trademark) receiver, broadcast reception communication device) is mounted with a standardized common API (application program interface). Additionally, the receiver receives a broadcast in the existing format, such as a terrestrial digital broadcast and a BS (broadcasting satellite) digital broadcast.

The broadcasting facility multiplexes with broadcasting waves, signals for activating cooperative communication/broadcasting services. A multiplexing format will be explained later.

[1.3 Example Of Configuration Of Broadcasting Server Group]

The broadcasting server group manages and delivers content and metadata owned by the broadcasting station. For example, the broadcasting station server group includes various servers, a data storage unit (DB (database)), and an API. Servers constituting the broadcasting server group include a content management server, a viewer management server, a content delivery server, and a broadcasting station service server.

The content management server that manages content manages programs and metadata which are broadcasting content. The content management server includes a program management server that manages broadcast programs or programs to be broadcast, and a metadata management server that manages metadata related to programs. Metadata indicates, for example, a program title, a program ID, a program summary, casts, staffs, the broadcast date, a script, a caption, an explanation, and the like.

The viewer management server manages viewers (users). The content delivery server delivers content data by communication. The broadcasting station service server is a server for a broadcasting station to provide services to the service organization. Services to be provided by the broadcasting station service server include, for example, a social networking service operated by the broadcasting station, a weblog (blog) for each broadcast program, and the like.

The data storage unit of the broadcasting station server group includes content owned by the broadcasting station, a portion that stores metadata, and a database. There is an access limitation such that only the managing service organization may access those stored data, and others may not access those data.

The API for the broadcasting server group is an API that provides data in accordance with a request from the service organization server group. The API includes: a program that an application invokes to receive a service; and an execution unit that executes the invoked program.

[1.4 Example Of Configuration Of Service Organization Server Group]

The service server group managed and operated by the service organization manages and provides applications and content. The service server group includes a receiver application server, a service server, a content delivery server, a data storage unit (DB (database)), and an API.

The receiver application server is a server that manages applications of cooperative communication/broadcasting services. The service organization stores, manages, and delivers applications that run on the receiver. The service organization is constituted of a group or individuals. In accordance with a request from a receiver, the receiver application server informs the receiver of the storage place of an application file (application file will be explained later), and delivers the application file.

The service server is a server that provides services in accordance with a request from the application running on the receiver. The service server includes, for example, a multilingual caption server, a speech rate conversion sound server, a social TV server, a recommendation server, a program view server, a bookmark server, and the like.

The content delivery server is a server that provides content in accordance with a request from the application running on the receiver. The content delivery server includes, for example, a VOD (VideoOn Demand) delivery server, a caption delivery server, a multi-view delivery server, and the like.

The data storing unit of the service organization server group is a unit that stores content data, metadata, data generated by the service organization, viewer data, and application files. Only the managing service organization may access the data stored in the data storage unit, and others may not access those data.

The API of the service server group is an API that provides an application file, content, and a service in accordance with a request from the application running on the receiver.

[1.5 Receiver]

The receiver receives and displays a broadcast in the existing format, and executes a cooperative communication/broadcasting service. The broadcast in the existing format includes a satellite broadcast such as a terrestrial digital broadcast and a BS digital broadcast, and a data broadcast. Additionally, the receiver is connected to the Internet.

The receiver transmits a download request for an application to the service organization server based on the information multiplexed with the received broadcasting wave. The receiver executes an application program included in the downloaded application file, and thereby the application runs on the receiver. The application running on the receiver accesses the service organization server and thus acquires content.

Additionally, the receiver has a cooperative communication/broadcasting function that is a function necessary to execute a cooperative communication/broadcasting service, such as a synchronization function and an application control function. The API for the cooperative communication/broadcasting function is commonalized. For this reason, a production of an application is easy and an application is not dependent on the receiver.

Cooperative communication/broadcasting services have used a function of cooperating with a device, such as a personal computer and a mobile terminal.

The cooperative communication/broadcasting function includes a cooperative communication/broadcasting basic function and an option function that is mounted as appropriate. The receiver manufacturer mounts the cooperative communication/broadcasting function on every receiver. The application uses the cooperative communication/broadcasting function through the API. The cooperative communication/broadcasting function operates based on the API as will be explained later.

The API mounted on the receiver is defined so that operations of applications become identical without depending on the receiver. All applications execute processes of the receiver through the API. For this reason, the applications cannot access the functions unique to the receiver without through the API.

[1.6 Terminal Cooperation Model]

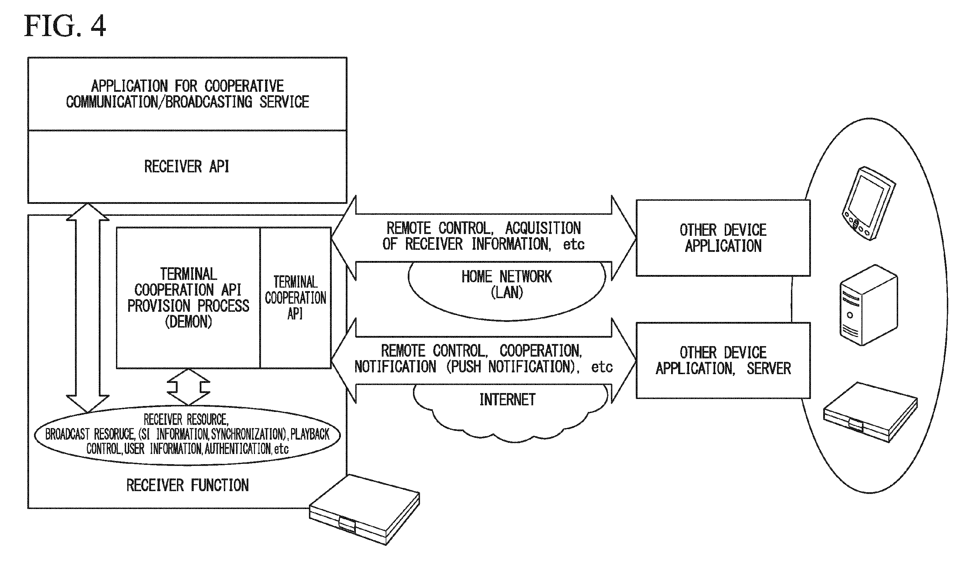

FIG. 4 is a diagram illustrating a terminal cooperation model of the cooperative broadcasting/communication system.

The receiver can provide services in cooperation with a terminal such as a mobile terminal. The cooperating terminal includes, for example, a personal computer, a cellular phone, a tablet, a smart phone, a PDA (personal digital assistant), and the like. The receiver provides, as an API, a function available to another terminal as a receiver function. The API that provides a function available to other terminals is referred to as a terminal cooperation API. For example, using the terminal cooperation API, an application running on a mobile terminal can access broadcasting resources such as an acquisition of program information, and invoke a receiver function such as a playback control.

[1.6.1 Terminal cooperation API]

The terminal cooperation API is an API for another terminal or an application running on that terminal to use receiver functions. A cooperating terminal includes a terminal on a home network (LAN) and a terminal to be accessed via the Internet. The definition of an API that provides various operations will be explained later.

[1.6.2 Terminal cooperation API Provision Process]

A terminal cooperation API provision process that operates on the receiver operates the terminal cooperation API. The terminal cooperation API provision process operates as a type of demon process that is resident and operates.

[1.6.3 Protocol To Invoke API]

For example, RESTful (REST: representation state transfer), UPnP (universal plug and play), XMPP (extensible messaging and presence protocol), or the like is used as the protocol that invokes a terminal cooperation API.

[1.6.4 Push Notification Function]

The receiver supports a notification function for a server or the like on the Internet to notify the receiver of information by pushing. The receiver receives the information notified from the server or the like by push notification. Along with the notification function, operation of some receiver function has to be controlled. The notification function is defined as one of specifications of the terminal cooperation API.

[2. Cooperative Communication/Broadcasting Application]

[2.1 Service And Application Model]

The application model of the cooperative communication/broadcasting system is a model generated by making additions and changes to the concept of the application model of DVB-GEM1.2.

[2.1.1 Cooperative Communication/Broadcasting Application]

Operation of the application for cooperative communication/broadcasting services is grouped into two patterns which are operation that cooperates with AV (audio visual) content (cooperation) and operation executed only by an application (non-cooperation). The AV content is broadcasting content (program) or communication content (VoD, etc.).

In the case of cooperation, a life cycle control of application, such as activation, is executed in cooperation with a broadcast or communication content. An application is activated based on an AIT (application information table, application activation information) delivered with AV content. In this case, it is possible for a provider of AV content, such as broadcasting organization, to control the life cycle, such as an automatic activation and termination of an application, and the like, in addition to operations of activation and terminal performed by a viewer.

On the other hand, in the case of non-cooperation, an application activates and terminates by itself, not in cooperation with a broadcast or communication content. In this case, the life cycle of the application, such as an initiation and termination of the application, can be controlled only by a viewer.

[2.1.2 Service]

Conventionally, a service is organized by a broadcasting organization, and a service means continuous programs that can be broadcast as part of a schedule. In the cooperative communication/broadcasting system, the above concept is expanded, and two types of service, which are a stream dependent service and an independent service, are defined.

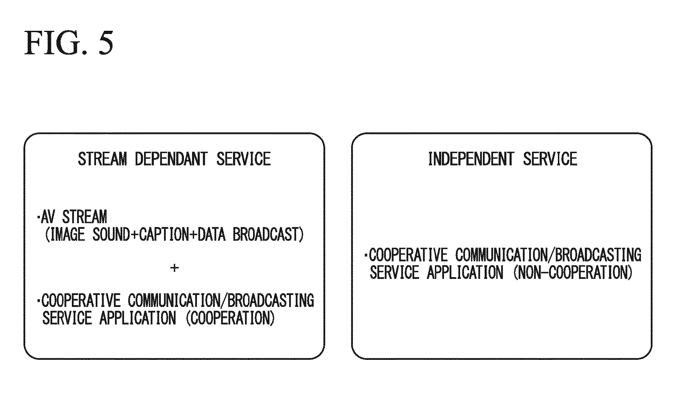

FIG. 5 is a conceptual diagram illustrating types of service.

In the receiver, a stream dependent service and an independent service are selected in a pseudo manner, thus activating a related application.

The stream dependent service is an expansion of the concept of the conventional service, and includes, in addition to an AV stream transmitted by broadcasting or communication, an application (multiple applications allowed) that operates in cooperation with the AV stream. The application can be activated cooperatively by selection and playback (selection in the case of broadcasting) of an AV stream.

On the other hand, an independent service does not include image and sound streams, but includes only an application (multiple applications allowed). The application is activated by a viewer selecting an independent service.

[2.1.3 Activation Of Application Acquired by On-The-Fly And Activation Of Installed Application]

There are two methods of activating an application, which are a method of acquiring an application file on-the-fly and activating the application file, and a method of activating an application file previously installed in the receiver. "On-the-fly" is a method of acquiring an application file by communication at the time when the application is executed, which is also referred to as an "uninstalled" method or a "direct execution" method.

Here, based on a notification of an application by the AIT as will be explained later, the receiver activates an application program in an application file stored in a local file system. When the receiver acquires and installs an application file by communication, the receiver rewrites information in a location hierarchy set to a related AIT (see section 2.5.1) with the location on the local file system. Operation of the receiver generating a value for identifying an independent service is necessary as appropriate (necessary for each AIT for an independent service).

[2.2 Notification Of Application (Signaling)]

[2.2.1 Application Activation Information (AIT)]

Notification of an application included in a service is performed using application activation information notified at the time when a service is selected. An AIT defined by ARIB STD-B23 (hereinafter described as "ARIB-J") is used as application activation information. For each of the stream dependent service and the independent service, the AIT dedicated for that service is notified. The details of transmission of an AIT for each service are shown hereinafter.

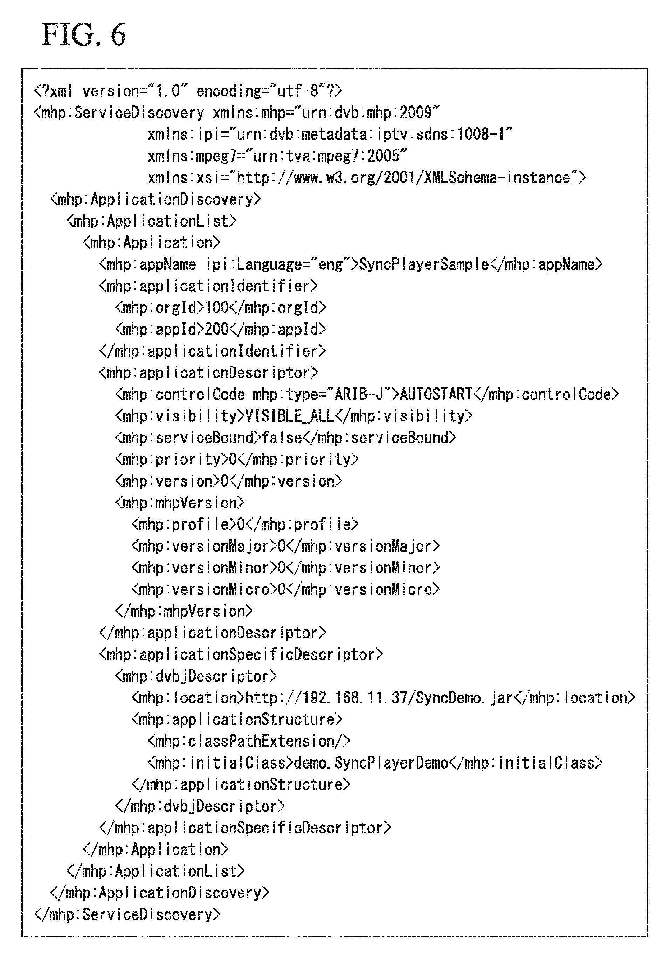

FIG. 6 is a diagram illustrating a text expression of the AIT used in the cooperative communication/broadcasting system.

The AIT used in the cooperative communication/broadcasting system is based on the AIT defined by the ARIB-J. For the AIT, there are a binary expression to be transmitted by an SI (service information) table, and a text expression (AIT file) in XML (extensible markup language) format. In FIG. 6, an example of the text expression is shown. In the AIT, an application ID (applicationIdentifier) that identifies an application, a control code (controlCode) that controls a state of the application, location information (location) that indicates the stored position (repository) of an application file.

[2.2.2 Notification Of Application That Cooperates With AV Content]

For a notification of an application that cooperates with AV content, there are cases where the AIT is multiplexed with AV content to be transmitted by MPEG (moving image experts group)-2 TS (transport stream) and where information concerning the AIT is separately transmitted. The AIT is transmitted in cooperation with the AV content, thereby making it possible for the receiver to perform a life cycle control, such as an activation of the application in cooperation with a broadcasting program, and a dynamic activation of the application in cooperation with the progress of the program.

The notification method includes, for example: (1) addition of an ES (elementary stream) for the AIT; (2) addition of a descriptor to an EIT (event information table); (3) carousel transmission; (4) acquisition of an AIT file by communication; (5) dynamic transmission of an AIT file by communication; and the like.

(1) In the case of addition of an ES for the AIT, the ES for the AIT is multiplexed with a broadcasting TS, similarly to the definition by the ARIB-J.

(2) In the case of addition of a descriptor to an EIT, a descriptor is added to the EIT (p/f), and the same information as the information to be transmitted by the AIT is transmitted.

(3) In the case of carousel transmission, the AIT is transmitted by DSM-CC (digital storage media command and control) data carousel. For example, an AIT file is transmitted by a particular module. It is expected that the carousel transmission will cause overhead due to an acquisition time, but there is no need to change the existing broadcasting signals.

As an application example of the carousel transmission, a component tag and a module of a carousel for transmitting a cooperative communication/broadcasting activation file are fixed. For example, "AA" is set to the component tag, "0000" is set to the module ID, a type indicating the AIT is set to the module Type descriptor. The receiver monitors an update of the module. Upon detecting an update, the receiver reads the AIT and executes a control specified by the AIT (the life cycle control on an application).

(4) In the case of acquisition of the AIT file by communication, a separately prepared AIT file is acquired simultaneously with a selection of AV content. For example, both the AIT file and the AV file are acquired based on information describing information concerning AV content to be played back (content ID) and application activation information (AIT). The concept of use unit content for server broadcasting (ARIB TR-B27) and entry components may be used.

(5) In the case of dynamic transmission of the AIT by communication, while AV content is played back, a control, such as an activation of a new application and a termination of the running application, is performed by the AIT transmitted by communication. Here, in a case where a control is performed at an unexpected timing, push notification via communication is performed.

[2.2.3 Notification Of Application That Operates Independently]

The receiver acquires, by communication, an AIT including information concerning an activation of an application that operates independently. The independent application is acquired from a known application repository. Procedure for acquiring information concerning an activation of each independent application is shown hereinafter.

(1) A location of the application repository is set to the receiver. The location may be previously set at the time of shipping, or multiple repositories may be added later by some method.

(2) When an application menu is opened, the receiver acquires an application list (including a location description of the AIT for each application) from the application repository, and applications are displayed on the menu.

(3) The AIT for the application selected by a viewer is acquired by communication.

The above procedure is executed using a WEB API provided by the repository. Additionally, the application that operates independently does not operate in cooperation with AV content, and therefore does not execute a dynamic life cycle control at the timing previously specified. The control (such as a termination) at the timing not previously specified is executed by push notification via communication.

[2.3 Activation And Termination Of Application]

[2.3.1 Life Cycle Of Application]

[2.3.1.1 Life Cycle]

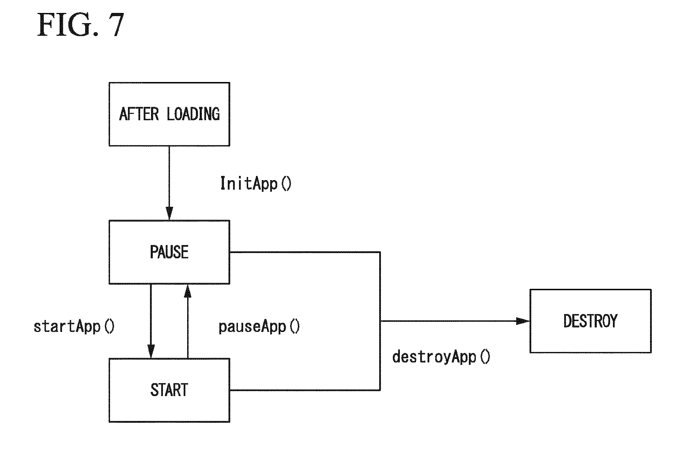

FIG. 7 is a diagram illustrating the life cycle of an application.

The states of the application are based on the states of an application defined by the ARIB-J, and include five states: "Not Loaded (pre-loading)", "Loaded (post-loading)", "Paused (pausing)", "Started (initiation)", and "Destroyed (destruction)". In those five states, a series of steps from the time when the application is loaded to the time when the application is executed and terminated is called the life cycle. Additionally, a control of transition between each states is called a life cycle control.

[2.3.1.2 Basic Life Cycle Control Of Application That Cooperates With AV Content]

A life cycle control of an application that cooperates with AV content is executed basically though a selection of a stream dependent service.

The selection of a stream dependent service is performed by a viewer. A service is a set of content items including AV content and an application. The life cycle of the service, such as activation and termination, is controlled based on a control code included in the AIT transmitted with the application. In some cases, one service includes multiple applications which operate simultaneously.

Selection of a service that triggers an activation of an application is controlled by an application through the receiver API, by a navigator as a resident application of the receiver, by a control of buttons of a remote controller in the case of broadcasting services, or the like. At the time of changing the service, presentation of content (AV content and an application) included in the services before and after the change is switched. In a case where different applications are included in the services before and after the change, the application running before the change is terminated by the change of service, and the different application becomes able to be activated after the change. The details of those operations are explained later in section 2.4.

[2.3.2 Activation Of Application]

[2.3.2.1 Activation By AIT]

In a case where a service (stream dependent service, independent service) is selected in the receiver, the application for which "auto-start" is specified by the control code included in the AIT provided with the service is automatically activated with the selection of the service without any express action from a viewer. While the service is selected, the life cycle thereof is controlled by an application signaling with respect to that service. For example, in the case of a broadcasting service, the receiver always monitors the AIT transmitted with a broadcast, and reacts to a change thereof. Thus, the receiver can control a new application to be automatically activated (auto-start) in the interim by an application signaling, such as transmission of the AIT.

The application for which "auto-start" is not specified by the application activation information included in the AIT is not automatically activated, and requires an express activation by the viewer. The express activation is performed by an application launcher of the receiver for a resident application. For example, a cooperative communication/broadcasting service button of a remote controller is pressed at the time of selection of a broadcasting service. Thus, a menu for activating an application is opened on the receiver, and a list of applications that cooperate with the current broadcasting (communication) service is displayed. Then, the viewer performs an operation to select an application to be activated and activate the application.

[2.3.2.2 Activation From Cooperative Communication/Broadcasting Application]

Since multiple applications can be activated in a service, there are some cases where another application included in the same service is activated from the already-activated application. An API for activating another application by specifying the application ID is defined in the ARIB-J application execution platform. In other execution platforms, an API with a similar function is defined.

[2.3.2.3 Activation From BML (Broadcast Markup Language)]

The receiver is provided with an execution platform for the existing BML data broadcasting, in addition to the execution platform for cooperative communication/broadcasting applications. For this reason, an API for controlling activation of cooperative communication/broadcasting applications is added as the API for the BML. Here, the BML is a multimedia encoding format defined by the ARIB STD B24, which has been used as a data broadcasting format for the existing Japanese terrestrial BS/CS digital broadcasting.

[2.3.2.4 Activation of Application That Operates Independently]

An independent service is a virtual service including only an application. By selection of an independent application, an AIT is acquired by the same mechanism as activation from AIT in section 2.3.2.1, and thus an application is activated. However, in the independent service, at least one auto-start application is activated. Selection of an independent service is performed from, for example, an application launcher.

[2.3.3 Termination Of Application]

[2.3.3.1 Termination By AIT]

The life cycle of the activated application is controlled by an application signaling with respect to that service. For example, in the case of broadcasting, the receiver always monitors an AIT transmitted with a broadcast, specifies a control code "destroy" with respect to the running application, and thus terminates the application. Also in a case where an AIT is multiplexed with a stream dependent service to be transmitted by communication, it is possible to control a termination of a cooperating application.

[2.3.3.2 Termination By Application Itself]

An application itself terminates the application using an API for termination.

[2.3.3.3 Termination by Another Application]

Using an application terminating API to be executed by an application, another running application is terminated. In this case, an adequate security policy for terminating the other application is necessary.

[2.3.3.4 Termination At Time Of Change To Another Service]

At the time when the receiver changes the service to another service, the application included in the service before the change, which is among the applications included in stream dependent services, is terminated, and an application transmitted by signaling in a new service is activated. In a case where the same application is included in the services before and after the change, operation may be continued. This is controlled by a flag included in the AIT. The details of a service bound application included in a stream dependent service will be explained in section 4.2.

[2.3.3.5 Termination By Receiver]

The receiver terminates the specified application by a receiver function. For example, the receiver displays a list of running applications, and terminates the application selected by a viewer.

[2.3.3.6 Dynamic Termination Of Application]

To dynamically control a termination of an application, an AIT file for ordering a termination of an application is transmitted to the receiver. In this case, the AIT is notified by push notification.

[2.3.4 Activation Of Multiple Applications]

[2.3.4.1 Application Transmitted By Signaling In Same Service]

The receiver can simultaneously execute applications listed by the AIT in the same service.

[2.3.4.2 Simultaneous Activation Of Applications That Operate Independently Of Application That Cooperates With AV Content]

An application that cooperates with AV content is activated only in stream dependent services. On the other hand, an application that operates independently may be simultaneously activated at any timing with an application that cooperates with AV content or with another application that operates independently.

[2.3.4.3 Management Of Resources At Time Of Activation Of Multiple Applications]

In a case where multiple applications are activated, there are some cases where those applications require the same resource of the receiver (such as a display). The receiver has a mechanism, such as a resource manager, and thereby performs operations of adequately allocating resources, of stopping execution of the application if no resources are available, and the like.

[2.4 Boundary Of Application]

[2.4.1 Basic Treatment of Bound/Unbound]

Applications include two types of applications, which are a bound application associated with an organized service and an unbound application not associated with the organized service. Which organized service a bound application is associated with is determined by which organized service the AIT including information concerning activation of that application is acquired from.

A bound application enters a state of being executable while the associated organized service is received. In other words, the bound application is activated by the AIT from the organized service and terminated when the reception of the organized service ends (when the organized channel being received is changed). Another application activated from the bound application is also treated as a bound application. When the original application activated first from a series of related bound applications ends, the other applications activated from the first application also end.

An unbound application is not associated with an organized service. For this reason, execution of the application is continued even if the organized service being received is changed. An AIT for activating an application cannot be acquired from the organized service. For this reason, activation information is given to the receiver by another means (for example, by acquiring an AIT file associated with the application using an application launcher or the like), and thus the unbound application is activated. Another application activated from the unbound application is also treated as an unbound application. Basically, an application is terminated by an express operation of a viewer. However, the application is terminated also in a case where an instruction (KILLALL) to terminate all applications is given by the AIT from the organized service being received.

[2.4.2 Unique Treatment of Unbound Application]

An unbound application is not associated with an organized service. As shown in section 2.3.2.4, however, the unbound application is associated with a virtual organized service (generated in the receiver at the time of start-up of the receiver), and thereby the same activation process mechanism as that for the bound application can be applied.

A method of generating a virtual organized service is implementation dependent for the receiver. What identification value is to be given to that organized service differs depending on the implementation of the receiver. In a case where an application file is installed in the receiver so as to be activated by an application launcher at any timing, however, it is necessary for the receiver to update the contents of the AIT so that an ID for identifying a virtual organized service, an acquisition source of the application file, and the like (the AIT acquired from a service organization server or a repository includes a description of that server as the acquisition source, and therefore a change has to be made to acquire the application file from a storage area in the receiver), are suited to the implementation of the receiver.

[2.5 Application Acquisition Method]

[2.5.1 Acquisition Based On AIT]

As described above, activation information of all applications is given by the AIT. Acquisition of the application file is instructed by location information of the application included in the AIT. For example, in the case of FIG. 3, the location information is described in the hierarchy of "/ApplicationList/Application/applicationSpecificDescriptor/dvbjDescriptor/location" (which is described in XML as the contents of the location element). The description of the location information is, for example, "http://192.168.11.37/demo.jar".

The above case is an example where "demo.jar" (application archive of Java (trademark)) is acquired using HTTP (hypertext transfer protocol) protocol. Transport protocol to be used and a package format of applications will be explained later.

[2.5.2 Package Format for Application]

A package format for applications depends on an application format (Java (trademark) or HTML5), and the like. The receiver acquires some bundle of files or an entry file, thereby acquiring a series of files required for activation of applications (programs themselves, image files, and the like). That series of files are the application files. Formats of application files include, for example, a compressed type of a series of files (zip file or the like), a Jar file (Java (trademark) execution platform), an entry HTML file (in the case of HTML5 execution platform), a uniquely defined entry file, and the like.

[2.5.3 Application Transmission Method]

Transmission methods for acquiring application files via a network include acquisition using HTTP protocol and acquisition using FILE protocol.

In the case of acquisition using the HTTP protocol, a GET method is used to acquire application files. "http://~" is set to specify the AIT location.

On the other hand, in the case of acquisition using the FILE protocol, when an application file (application program) stored (installed) in the local of the receiver, "http:///~" is set to specify the AIT location.

[3. Conditions of Interface]

[3.1 Cooperative Communication/Broadcasting Service Control Signal Of Broadcasting Wave]

Broadcasting waves require a mechanism for sending the application activation information explained in section 2.2.2. Further, assuming the time that an emergency warning is broadcast, "KILLALL" is added to an application control code (application_control_code) of the AIT defined in ARIB STD-B23, Part 2, Section 10.1.6.3.2, in order to forcibly terminate all applications. Table 1 indicates the meaning of the control code "KILLALL" to be added.

[Table 1]

| Code | Identification Name | Meaning |
|---|---|---|
| 0×08 | KILLALL | All applications are terminated regardless of whether it is cooperation or non-cooperation. For ARIB-J, the unconditional parameter is set to be true, and thus destroy method in Xlet is invoked. For the HTML5 browser or the like, the browser is forcibly terminated without displaying a dialog for inquiring a user about allowance or forbiddance of termination. |

Additionally, descriptors are added to the EIT and the AIT in order to control presentation of applications based on the relationship between applications and AV content. The details are explained in section 4.3.

[3.2 Broadcasting Server Group API]

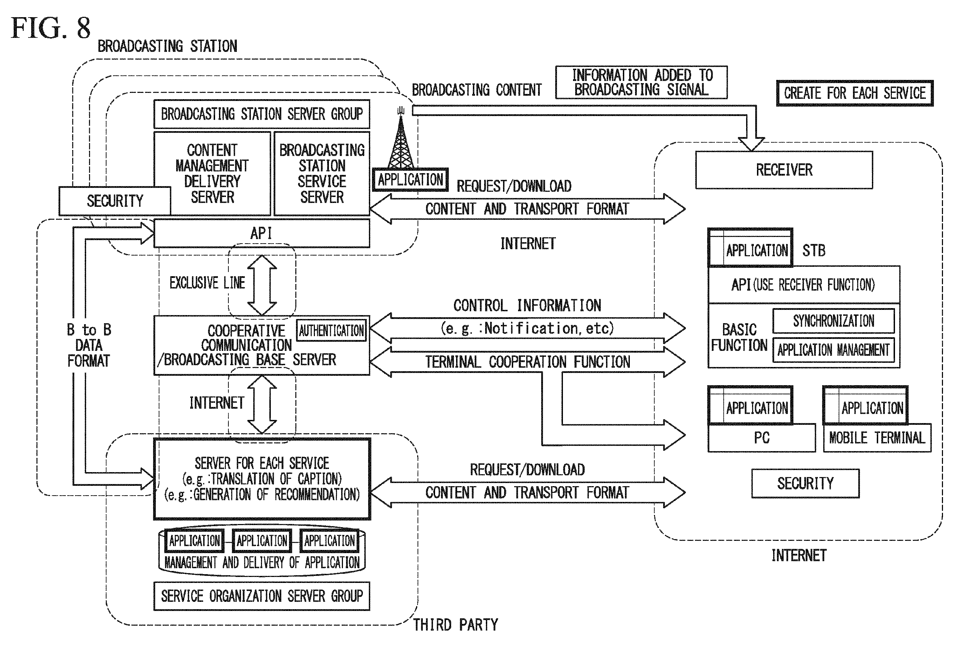

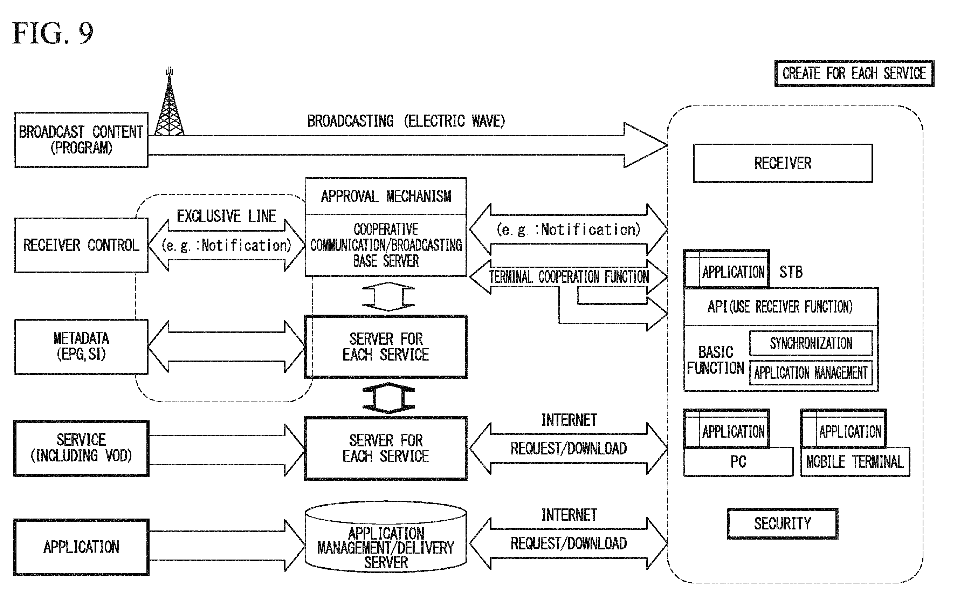

FIG. 8 is a diagram illustrating flow of data between organizations in the cooperative communication/broadcasting system. FIG. 9 is a diagram illustrating flow of data in the entire cooperative communication/broadcasting system.

Here, an explanation is given with respect to definitions of the API between a server for each service of the broadcasting station server group and a server for each service of the service organization server group, between the broadcasting server group and the cooperative communication/broadcasting base server, and between the cooperative communication/broadcasting base server and a server for each service of the service organization server group, which are shown in FIG. 8, and definitions of the API between the receiver control and the cooperative communication/broadcasting base server, and between metadata and a server for service, which are shown in FIG. 9.

[3.2.1 API]

Communication between the broadcasting server that is one of servers constituting the broadcasting station server group and a service organization server that is one of servers constituting the service organization server group is performed in a REST format. Additionally, it is expected that the directory structures of servers differ between a broadcasting station server and a service organization server in accordance with a provided service, and therefore API is determined by an agreement therebetween. An example of a URL of the broadcasting station server and the service organization server is shown below.

http://hybridcast.org/{broadcasting station name}/{server name}/{content ID}/{data to be managed}/{sorting method}/{head item},{number of pieces }/?{parameter}={value}/

[3.2.2 Recommendation Service]

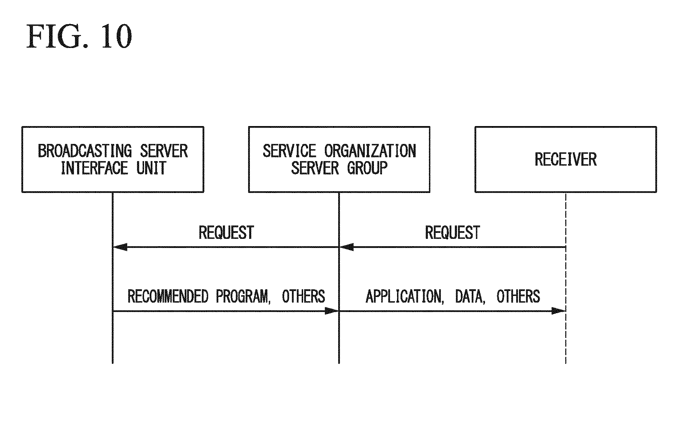

FIG. 10 is a diagram illustrating a sequence of a recommendation service. Methods used between the service organization server group and the broadcasting station server are "GET", "POST", "PUT", and "DELETE". An example of command formats is shown below.

(1) http://hybridcast.or.jp/{broadcasting station name}/{server name}/{content ID}/{data to be managed}/{sorting method}/{head item},{number of pieces}/

(2) http://hybridcast.or.jp/{broadcasting station name}/{server name}/{viewer ID}/{data to be managed}/{sorting method}/{head item},{number of pieces}/

(3) http://hybridcast.org/{broadcasting station name}/{server name}/{review ID}/{data to be managed}/{sorting method}/{head item},{number of pieces}/

Additionally, parameters include {broadcasting station name}, {server name}, {content ID}, {viewer ID}, {review ID}, {data to be managed}, {sorting method}, {head item}, {number of pieces}, and the like.

[3.2.3 Data To Be Managed]

Data to be managed includes content information, user information, user·generated·content information, devise information, and authentication information.

The content information includes data indicating a title, a summary, a genre, the broadcast date, a broadcasting time (time length), an image mode, a sound mode, caption data, a script, casts, music, a producer, a production company, a book, a recommended program, a picture URI, the playback number of times, a CM, time stamp information, and the like. The user information includes data indicating the name of a user (viewer), the age, the gender, an area, the review written number of times, the comment written number of times, favorites, a friend list, a playback place (time), a playback end place (time), a program viewed history, and the like. The user·generated·content information includes data indicating a content ID, a user ID, the contents of a review, the review written time, evaluation of review, and the like. The device information includes a device ID. The authentication information includes an authentication ID.

[3.3. Transport Format]

[3.3.1 About Image/Sound Used For Communication]

Images and sounds to be used for communication comply with Digital Television Network Function Specification, Streaming Function Specification, Protocol V1.1 (Networked Digital Television).

[3.3.1.1 Relationship With Mono Media Format For Image And Sound]

A TTS (timestamped transport stream) format is used for multiplexing an image encoded by MPEG-2 Video or H.264/MPEG-4 AVC (advanced video coding) with the sound encoded by MPEG-1 Audio Layer II or MPEG-2 Audio AAC, captions, and the like. However, MPEG2-S, MMT (MPEG media transport), MP4, and the like may be used.

[3.3.1.2 Related Transfer Protocol]

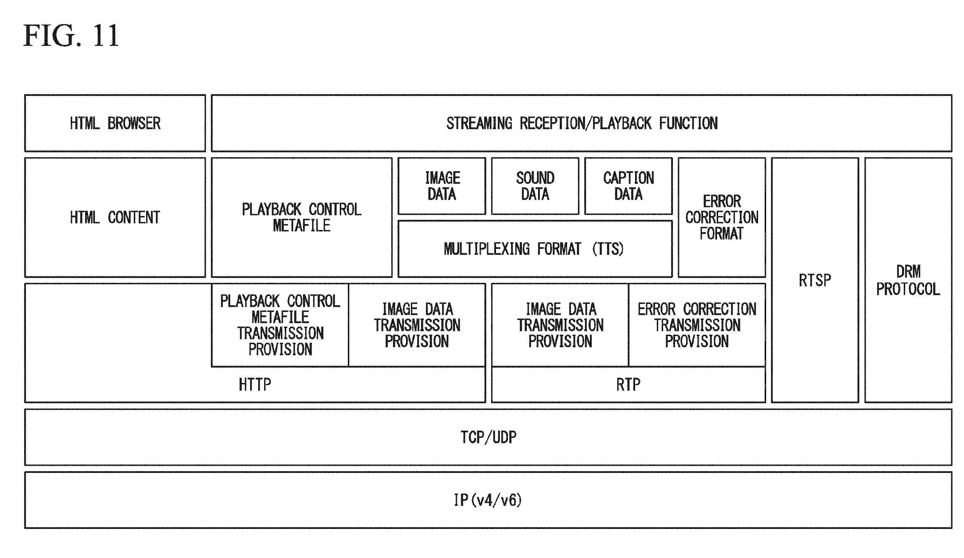

FIG. 11 is a diagram illustrating a transfer protocol stack.

For a stream transmission, RTP (real-time transport protocol)/UDP (user datagram protocol) and HTTP/TCP (transmission control protocol) are used. Here, in a case where RTP/UDP is used, information for error correction may be transmitted as an option. Additionally, in a case where HTTP/TCP is used, the connection, the method, and the header of the HTTP are used to perform a stream control. In a case where transmission is performed using RTP (real-time transport protocol), RTS (real time streaming protocol) is used for stream control information.

[3.3.2 Related Caption]

Multilingual captions comply with Timed Text Markup Language (W3C (world wide web consortium)). Here, synchronization is separately performed at the application level. Additionally, each associated font is downloaded as appropriate. For example, a font file is set to the payload of the HTTP. In this case, Dynamic Fonts and PFR (portable font resource) of the Web are used.

Preferably, the capacity of fonts is approximately 5-35MB.

[3.4 Mono Media Format]

The following defined mono media encoding is used for cooperative communication/broadcasting services.

[3.4.1 Moving Image]

For moving images, MPEG-2 Video defined by the ARIB STD-B32 V2.4, Part 1, Section 3.1 and MPEG4-AVC defined by the same standard, Section 3.2 are used. The constraint conditions of encoded parameters for television services defined by the same standard, Section 5.1 are applied.

[3.4.2 Sound]

For sound, MPEG-2 Audio and PCM (pulse code modulation) (AIFF-C (audio interchange file format compression)) are used.
In the case of the MPEG-2 Audio, MPEG-2 AAC defined by the ARIB STD-B32 V2.4, Part 2, Section 3.1 is used. The constraint conditions of encoded parameters defined by the same standard, Chapter 5 are applied.
In the case of the PCM, formats defined by the ARIB STD-B24 V5.4, Part 1, Sub-Part 2, Section 6.2 are used.
For additional sound, formats defined by the ARIB STD-B24 V5.4, Part 1, Sub-Part 2, Section 6.4 are used.

[3.4.3 Still Image]

In the case of JPEG (joint photographic experts group), the encoding formats defined by the ARIB STD-B24 V5.4, Part 1, Sub-Part 2, Section 5.2 are used.
In the case of PNG (portable network graphics), formats defined by ISO/IEC 15948:2003 are used. These are the same contents of W3C Recommendation Portable Network Graphics (PNG) Specification (Second Edition).

[3.4.4 Character]

For encoding of characters, the international encoding character set defined by the ARIB STD-B24 V5.4, Part 1, Sub-Part 2, Section 7.2 is used.
For an encoding character set, the BMP (basic multilingual plane) set defined by the same standard, section 7.2.1.1.3 is used, and chart 7-20 is applied. Additionally, ISO/IEC10646: 2003, Supplement 5 and Supplement 6 are applied.
For external characters, formats defined by the ARIB STD-B24 V5.4, Part 1, Sub-Part 2, Section 7.2.1.2 or formats defined by the ARIB STD-B23 Part 1, Section 5.2.1.2.
For control codes, only APR(CR) and APD (LF) among C0 control codes defined by the ARIB STD-B24 V5.4, Part 1, Sub-Part 2, Section 7.2.2.1 are used. Other C0 control codes and C1 control codes are not used.
Conversion of character codes comply with the ARIB STD-B24 V5.4, Part 1, Sub-Part 2, Appendix, Provision E.
In a case where information is encoded by a format other than the above-defined character encoding formats, the information is converted into the above character encoding format in a sending process or an appropriate process to be performed in the receiver, and thereafter processes are performed. In other words, character codes in other encoding formats are not directly used by applications.

[3.5 Application Format]

A method of describing applications executable on the receiver is shown. A connection of an execution platform for executing the applications generated by this description method and a secure manager is shown in Chapter 4.

[3.5.1 Application Format Executable On Receiver]

As a description format of applications executable on the receiver, BML (ARIB STD-B24), ARIB-J (ARIB STD-B23), and HTML5 (W3C HTML5 Working draft-2011/Jan/13) are defined.

[3.5.2 BML]

The receiver has a function of presenting BML documents based on the operational guidelines for terrestrial digital broadcasting (ARIB TR-B 14) or the operational guidelines for BS digital broadcasting (ARIB TR-B15). The receiver must be able to present data broadcasting services provided by terrestrial digital broadcasting or BS digital broadcasting as defined by the existing standard. However, the receiver requires as an essential function, the function of presenting BML content to be delivered by broadcasting in the data carousel format. However, the receiver does not require as an essential function, the function of presenting BML content to be provided by communication using HTTP protocol (TR-B 14 Part 4, Sub-Part 2, Section 5.14, and TR-B 15, Part 1, Sub-Part 3, Section 8.14).

Additionally, browser.startHybridcastApp(), and getAITInfo() are defined as broadcasting expansion APIs for activating a communication application defined as below.

Table 2 shows the definitions of browser.startHybridcastApp(). browser.startHybridcastApp() is an API that activates a cooperative communication/broadcasting application.

[Table 2]

| Grammar | Number startHybridcastApp (input String applicationURL, input Number applicationType, [input String returnURL]) |
|---|---|
| Argument | applicationURL: URL of application |
| | applicationType: constant value indicating type of application |
| | return URL: return at time of termination of application |
| Return Value | Value indicating result of execution |
| Explanation | Presentation of BML document is terminated by execution of present function, and presentation of specified application is initiated. |

Table 3 indicates the definition of getAITInfo(). getAITInfo() is an API that acquires the newest AIT information included in the service being received.

[Table 3]

| Grammar | Array getAITInfo (out Array) |
|---|---|
| Return Value | Array[0]: Value indicating result of acquisition |
| | Array[1]: Array storing information of application 1 (*1) |
| | Array[2]: Array storing information of application 2 |
| | Array[n]: repeated hereinafter |
| *1) | Formats for Array storing application information are as follows. |
| | Array[0]: Application ID |
| | Array[1]: URL of Application |
| Explanation | Acquire newest AIT information included in service being received. |

[3.5.3 HTML5]

[3.5.3.1 Description Format]

The receiver supports HTML5 as a description format for presentation engine applications provided by communication. As a JavaScript (trademark) API, the following is supported. Here, among the following APIs, APIs which have been considered by the W3C include Working Draft (WD) or Editor's Draft (ED). However, an API related to data carousel transmitted by broadcasting waves is not essential.

(1) System Information API (W3C Working Draft 02 Feb. 2010) (2) WebSocket API (W3C Editor's Draft 28 Feb. 2011) (3) File API (W3C Working Draft 26 Oct. 2010) (4) Permission for File API, System Information API (Permissions for Device API Access, W3C Working Draft 05 Oct. 2010) (5) Device Description Repository Simple API (W3C Recommendation 05 Dec. 2008) (6) API for Media Resource 1.0 (W3C Working Draft 08 June 2010) (7) Web Storage (W3C Working Draft 08 Feb. 2011) (8) Server-Sent Events (W3C Editor's Draft 28 Feb. 2011) (9) Indexed Database API (W3C Working Draft 19 Aug. 2010) (10) SI access API (11) Tuning API (12) Printing (13) Reservation

[3.5.3.2 Browser]

An HTML5 browser of the receiver is implemented with functions of a JavaScript (trademark) process system, Web Workers (W3C Working Draft 08 Feb. 2011), Widget Interface (W3C Working Draft 3 Feb. 2011), HTML Canvas2D Context (W3C Editor's Draft 28 Feb. 2011). Web Workers is necessary to support multitask. Widget Interface is necessary to support independent applications. HTML Canvas2D Context is necessary to support two-dimensional vector graphics.

[3.5.4 ARIB-J]

The receiver supports ARIB-J as a description format for application execution engine applications provided by communication. Additionally, DVB Bluebook A153 (GEM Media Synchronization API) is used as a synchronization API among multiple streams.

[3.6 Receiver API]

Hereinafter, a receiver API that can be used for the HTML5 and the ARIB-J is explained.

[3.6.1 Namespace]

Namespace is a description rule of character strings for specifying the positions of various resources used in the cooperative communication/broadcasting system, such as image sound content, applications, mono media files, and the like, which are present on a server or in the receiver. A method of describing namespace for referring to various resources, which is used in section 3.5.2 and more, is defined for each group. Resources include resources on an Internet server, resources on application cache, and resources for broadcasting. The resources on the Internet server include file resources likes stream resources, such as VOD content, applications, and other resources referred to by applications. The resources for broadcasting include stream resources such as programs on the air and past and future programs, and carousel resources such as modules and event messages.

[3.6.2 Cooperative Communication/Broadcasting Interface]

Cooperative communication/broadcasting interfaces include the following interfaces.
(1) getRunningApplications(): acquires information concerning a running application. A return value of getRunningApplications() includes apps[], and application_id and running_level for each application. apps[] is set with a list of running applications. application_id is set with an application ID, which is null in a case where the application is a general application (informal application). running_level is set with the execution level (a result of authentication and a state of viewer setting).
Here, in view of security, information that can be acquired with respect to other applications should be limited.
(2) queryApplicationInfo(): acquires information concerning the specified application.
(3) getProgramInfo(): acquires information concerning a broadcast being received. A return value includes tuner_state, network_id, ts_id, orig_ts_id, service_id, event_id, and content_id. tuner_state is set with a value indicating the reception state.
(4) getEPGInfo(): acquires various information in the EIT (+SDT) of a broadcast being received.
(5) saveApplicationToCache(): stores in a cache, an application file on a server.
(6) queryApplicationInCache(): searches an application file (application program) in the cache. An argument of queryApplicationInCache() includes application_id, getDSMCCModule(), addBroadcastSignalListener(), and getListFromHybridcastMenu(). The application_id is set with an application ID issued from a certification authority. The getDSMCCModule() acquires a module specified by a broadcasting wave. The addBroadcastSignalListener() registers a listener that monitors updates of an SI, emergency information, a carousel, and an event message. The getListFromHybridcastMenu() acquires a list of applications on the top menu. A return value of the queryApplicationInCache() includes user_apps[], broadcaster_apps[], and vendor_apps[].
(7) addApplicationToHybridcastMenu(): adds an application to the top menu.
(8) getKeyFromBroadcast(): acquires from a broadcast, key information to access a limited server.
(9) querySupportedFunction(): inquiries about a function of an application browser. This is used to confirm whether or not a function/API is available.

[3.6.3 BroadcastSignalListener Interface]

A BroadcastSignalListener interface is a listener interface that monitors an SI, emergency information, a carousel, and an event message, which are acquired from a broadcast. Also, when an associated organized service is changed during execution of a bound application, an event of this interface occurs.

[3.6.4 LocalDatabase Interface]

A LocalDatabase interface is an interface for storing and managing viewer information in the receiver. The viewer information is information, such as private information, which should not be disclosed to the server side, that is, the minimal information, such as a viewer ID or a receiver ID.

[3.6.5 Synchronization Related API]

As a SynchronizationManager interface, an API similar to DVB Bluebook A153 (GEM Stream Synchronization API) is introduced. Further, the following interfaces are added as APIs.
(1) getCurrentSTC(): acquires the current STC (system time clock) value. Here, according to the MPEG2 streams standard, it is defined that a system clock (STC) on the transmission side is multiplexed and delivered as a PCR (program clock reference) signal in an MPEG2 transport stream, and thus a system clock (STC) in the receiver is synchronized with the STC on the transmission side.
(2) getCurrentPositionInProgram(): acquires a time elapsed from the start of a program.
(3) delayStreamPresentation(): initiates presentation of a delay of a broadcasting stream being presented.
(4) getCurrentDelay(): acquires a delayed time of the broadcasting stream being presented (from the scheduled presentation time).

[3.6.6 SecurityException Interface]

This is an exceptional interface that occurs when an application executes function calling or property operation which is prohibited at the current execution level. The SecurityException interface occurs by calling of each of the above APIs, or various operations with respect to an object for referring to a broadcast (<video> of HTML5, XX Controller of ARIB-J).

[3.7 Receiver Function]

The receiver in the cooperative communication/broadcasting system includes an application launcher, as a receiver function. The application launcher is used for activation of the application installed in the receiver, selection of an independent application from the known repository, and selection of the application for which the control code is "PRESENT", among the applications for which activation instructions are described by the AIT.

[4. Security]

[4.1 Management of Cooperative Communication/Broadcasting Application]

To disseminate and activate cooperative communication/broadcasting services while meeting the requirements of the broadcasting organization, a framework that enables not only a broadcasting organization and its related parties, but also a great number of service organizations and individuals to join is necessary. In the present cooperative communication/broadcasting system, in view of security, applications are grouped into "A applications" and "general applications", and both applications are executable by the receiver.

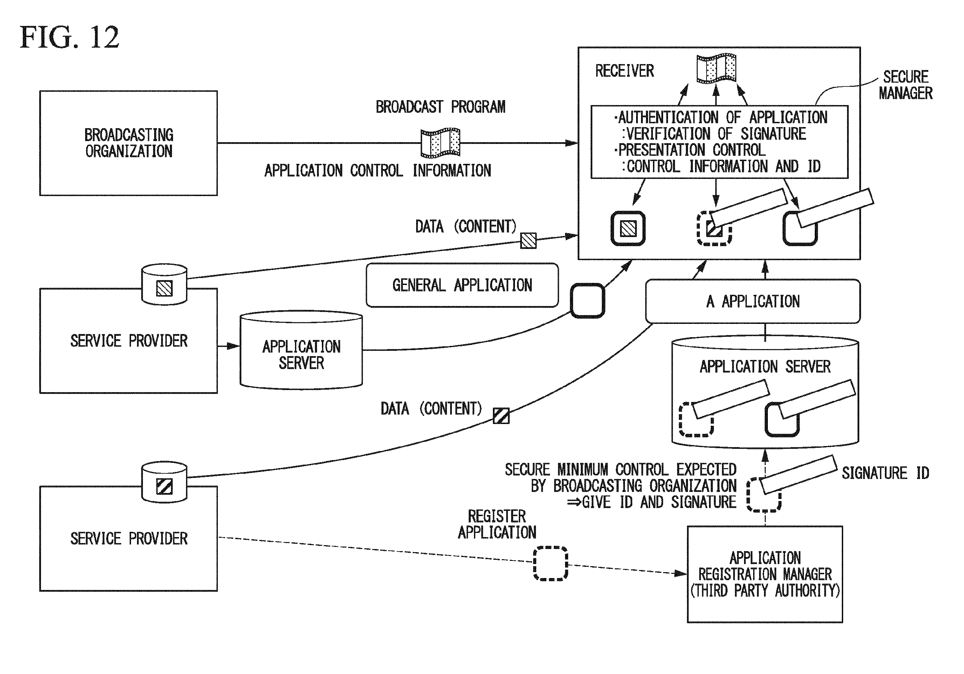

FIG. 12 illustrates an application management model in the cooperative communication/broadcasting system. "A applications" are previously registered to a registration manager (third party authority), thereby ensuring the operation expected in the specification of the cooperative communication/broadcasting system. "A application" is added with an ID and a signature at the time of registration. In the receiver, the signature is verified by a secure manager defined in section 2.2. Thereafter, access to all APIs is enabled, and thus program cooperative services using broadcasting resources become available. Additionally, a detailed presentation control meeting the requirements of the broadcasting organization is enabled by the AIT sent from the broadcasting organization.
On the other hand, "general applications" are not necessary to be registered previously. However, operation expected in the specification of the cooperative communication/broadcasting system is not ensured, and applications cannot use broadcast-related APIs. A "general application" is not added with an ID and a signature. For this reason, it is difficult to specify an individual application, but it is possible to execute the application after adding a presentation restriction based on the requirements of the broadcasting organization.

# EP 2 712 186 A1

[4.2 Functional Model Of Secure Manager]

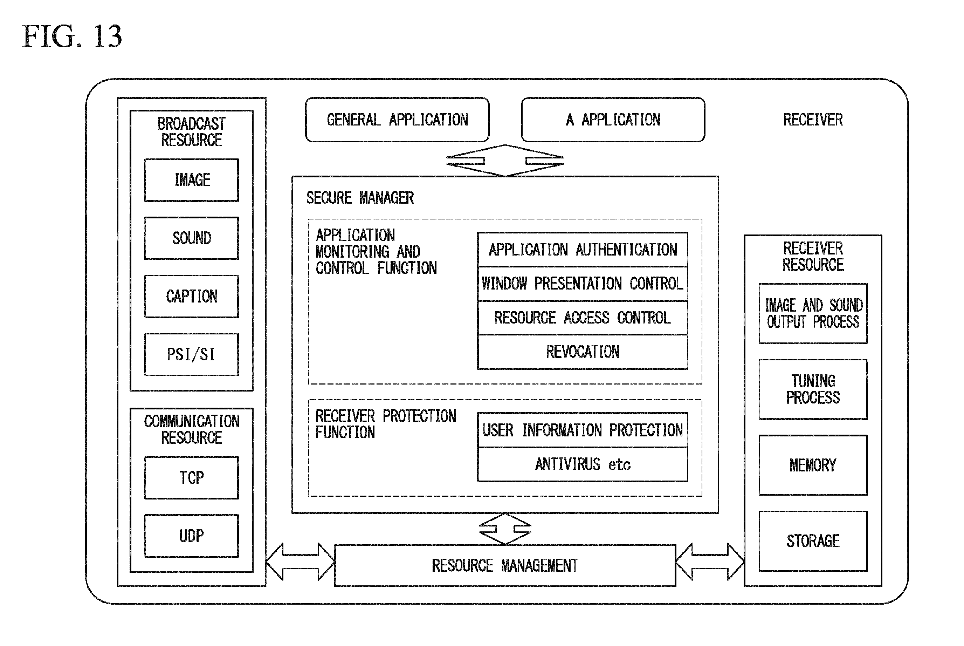

FIG. 13 illustrates a functional model of a secure manager. The secure manager is a function of managing the entire security in the receiver.

[4.2.1 Application Monitoring And Controlling Function]

As explained above, according to embodiments of a delivery of application files, applications that run on the receiver are grouped into two types, which are "A applications" and "general applications". A "A application" and a "general application" are distinguished from each other based on the presence or absence of an ID and a signature as shown in section 4.1. Operations of those applications at the time of execution of the applications differ. For example, the access regions for the API in the receiver and regions of control by the broadcasting organization differ. An application monitoring and controlling function has an object to identify the difference in type between the A application and the general application, and reliably control the operation at the time of execution of the application.

(1) Verification of Application: with respect to all applications to be executed, the receiver determines whether each application is an A application or a general application, and if the application is an A application, identifies an ID of the application. The receiver confirms and verifies the presence or absence of a signature added to an application file (application program), thereby distinguishing between an A application and a general application. If the application is an A application, the receiver further acquires an application ID described in the signature. Identification of an application is performed at the time of a receipt of the application or at the time of activation thereof.
(2) Window presentation control: will be explained later in section 4.3.
(3) Resource access control: the receiver controls an access of the running application to the API, such as broadcasting resources. When an application attempts to access an API, if that application is a general application, an access thereto is limited based on the type of the API.
Additionally, when an application accesses an API for displaying a window on a display, a window presentation control is performed based on the type of A application or general application, and the presentation policy of the broadcasting organization being selected. The details will be explained later in section 4.3.
(4) Revocation: has a function of revoking an application.

[4.2.2 Protection of Receiver]

The receiver is provided with a function of protecting viewer information and a protection function such as antivirus.

[4.3 Window Presentation Control By Application]

[4.3.1 Summary of Window Presentation Control]

In the cooperative communication/broadcasting services, a broadcasting program and related communication applications are simultaneously presented, thereby expanding convenience of broadcasting services. On the other hand, it is expected that with use of communication services, a broadcasting program and a communication application are mixed and presented on the display of the receiver. In some presentation method, a window for the communication application is overlay-displayed on the broadcasting program, thereby making it likely to cause losses of uniqueness and productivity of the broadcasting program, and further prevent emergent information, such as emergency earthquake report, from being accurately delivered to viewers. In the cooperative communication/broadcasting services, a window presentation control is performed to control presentation of applications based on the intent of the broadcasting organization.

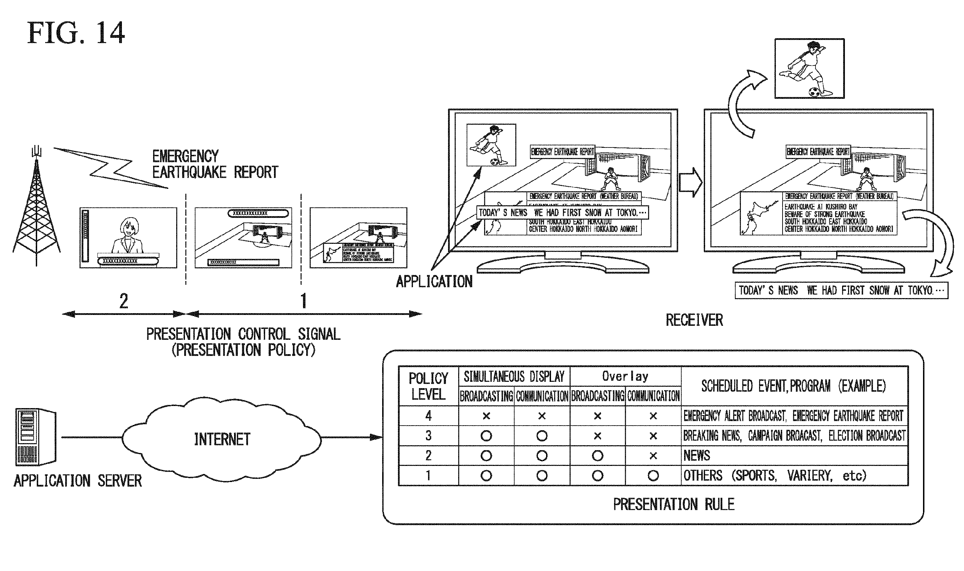

FIG. 14 is a diagram illustrating concept of a window presentation control method. The window presentation control method is a method intended to reflect on the receiver, the presentation policy of the broadcasting organization regarding how to present communication applications on the display with respect to each broadcasting program, which is referred to as a content presentation control. The content presentation control implements a presentation control for each program according to the organization of the program, a presentation control with respect to an event that occurs during a program such as emergency earthquake report, and a presentation control for each application.

19

[4.3.2 Basic Operation of Window Presentation Control]

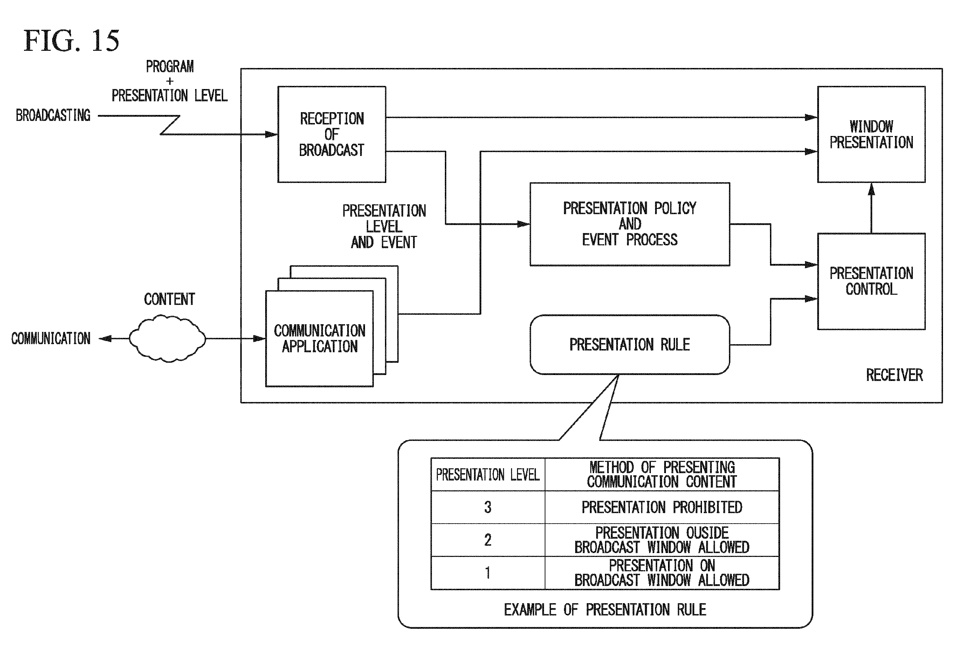

FIG. 15 is a diagram illustrating a basic operational model of the window presentation control. To reflect the presentation policy of the broadcasting organization on the receiver, the receiver manages, as a presentation rule, methods of presenting communication content with respect to broadcasting programs, which are previously considered by the broadcasting organization. Specifically, as a method of presenting communication content, a level sorting is made in accordance with the differences in the overlay-display order and the arrangement order. Then, a table storing presentation levels (policy levels) and presentation methods are stored in the receiver as a presentation rule. The broadcasting organization multiplexes the presentation level to be specified with a broadcasting wave and transmits the multiplexed wave. Then, the receiver checks the presentation level against the presentation rule, thereby determining a presentation method. Thus, it is possible to implement a presentation control based on the presentation policy of the broadcasting organization.

[4.3.3 Method Of Transmitting And Multiplexing Control Information]

Regarding a format of control information that carries the presentation policy of the broadcasting organization, three specific examples of methods using program arrangement information used for digital broadcasting are shown here. As a window presentation control for each program, there are a method using the existing EIT (event information table) and a method using the expanded EIT (EIT+). Additionally, as a window presentation control for each service (channel), there is a method using the expanded AIT for broadcasting signals. Further, as a window presentation control for each event that occurs in real time during a program, there is a method using information sent from a broadcasting station, which is other than the program arrangement information. Hereinafter, the details of the four methods are described.

(1) Program genre of EIT (EIT): the policy level is determined based on the program genre described in the content descriptor of the existing EIT. For this reason, the receiver manages a table indicating the relationship between the program genre and the policy level. The relationship with the ARIB standard is described in the ARIB STD-B10 Part 2, 6.2.4, Appendix H.

Table 4 is a table showing a specific example of the relationship between the program policy and the policy level. The program genre (program_genre) has a 2-level structure including "content_nibble_levell" ($0\times0$ to $0\times F$) indicating a major classification and "content_nibble_level2" ($0\times0$ to $0\times F$) indicating an intermediate classification. Up to the intermediate classification are entries of the table managed by the receiver, and values of the policy levels are defined.

[Table 4]

| program_genre (content_nibble_level1-content_nibble_level2) | policy_level (1 to 4) |
| --- | --- |
| $0\times0$-$0\times F$ | 3 |
| $0\times0$-$0\times1$ | 1 |
| ... | |
| $0\times0$-$0\times F$ | 1 |
| ... | |
| $0\times F$-$0\times F$ | 1 |

(2) Addition of new descriptor to EIT (EIT+): a new descriptor is added to event information section of the EIT, and policy information is described. The receiver interprets the descriptor and performs a desired process, thereby implementing a control in accordance with the policy level for each program. The relationship with the ARIB standard is described in the ARIB TR-B14 (Second Book) Part 3, 31.3 and the ARIB STD-B10, Part 2, 5.2.7.

Table 5 is a table showing a structure of an event security descriptor. In the case of EIT+, an event security descriptor shown in table 5 is newly defined. Then, the event security descriptor is stored in a descriptor region of the EIT and is transmitted. The event security descriptor includes the policy level (policy_level), an application ID (application_identifier), a control code (application_control_code), a priority (application_priority), a protocol identification (protocol_id), and a program related flag (associated_application_flag).

[Table 5]

| Data Structure | Number of Bits | Bit String Description |
|---|---|---|
| event_security_descriptor(){ | | |
|     descriptor_tag | 8 | uimsbf |
|     descriptor_length | 8 | uimsbf |
|     policy_level | 8 | uimsbf |
|     for (i=0; i<n; i++){ | | |
|         application_identifier() | | bslbf |
|         application_control_code | 8 | uimsbf |
|         application_priority | 8 | uimsbf |
|         protocol_id | 16 | uimsbf |
|         associated_application_flag | 1 | bslbf |
|         reserved_future_use | 7 | bslbf |
|     } | | |
| } | | |

The policy_level indicates the policy level for each program. The policy level is a value in the range of 1 to 4.

The application_identifier() is an identifier for identifying an application. Table 6 shows a structure of the application_identifier().

[Table 6]

| Data Structure | Number of Bits | Bit String Description |
|---|---|---|
| application_identifier() | | |
|     organization_id | 32 | bslbf |
|     application_id | 16 | bslbf |
| } | | |

The organization_id indicates an organization that has generated an application, and is a value following 0x00000063. The application_id indicates a number for identifying an application. The application_id is uniquely added in the organization identification.

The application_control_code defines a control code that controls the state of an application. Table 7 shows the definitions of control codes.

[Table 7]

| Code | Identification Name | Meaning |
|---|---|---|
| 0×00 | Reserved_future_use | |
| 0×01 | AUTOSTART | Auto-activation of application |
| 0×02 | PRESENT | Stand-by of application |
| 0×03 | DESTROY | Termination of application |
| 0×04 | KILL | Forcible termination of application |
| 0×05 | reserved_future_use | |
| 0×06 | REMOTE | Remote application |
| 0×07 | DISABLED | Non-use of application |
| 0×08 | KILL ALL | Forcible termination of all applications |
| 0×09···0×FF | Reserved_future_use | |

The application_priority indicates the policy level for each application. The policy level for each application indicates relative priorities among the applications notified in the service. The priority is a value in the range of 1 to 4.

The protocol_id indicates protocol for transmitting an application file. Table 8 shows the definition of the protocol_id.

[Table 8]

| Value | Meaning |
|---|---|
| 0×0000 | reserved_future_use |
| 0×0001 | Object carousel transmission protocol |
| 0×0002 | Reserved |
| 0×0003 | HTTP transmission protocol |
| 0×0004 | Data carousel transmission protocol |
| 0×0005···0×FFFF | reserved_future_use |

The associated_application_flag indicates whether or not an application is an application cooperative with a program. Table 9 shows the definition of the protocol_id.

[Table 9]

| Value | Meaning |
|---|---|
| 0 | Include no contents cooperative with program |
| 1 | Include contents cooperative with program |

(3) Table definition of AIT and addition of new descriptor (AIT+): AIT is expanded and policy information is transmitted. The receiver interprets that table and performs a desired process, thereby implementing a control in accordance with the policy level with respect to an event that occasionally occurs. The relationship with the ARIB standard is described in the ARIB STD-B23 Part 2, 10.16.

Table 10 shows a data structure of the AIT. The ATT shown in table 10 is the expansion of the data structure of the AIT defined in the ARIB STD-B23. The policy level, an application ID, and a control code are described in the AIT. Here, the AIT is transmitted by section format, and is continuously transmitted while an event continues. An application ID is described in application_identifier(). A control code is described in application_control_code. Here, these details are similar to those described in "(2) Expansion of EIT".

Further, to describe the policy level, a security policy descriptor is newly defined, is stored in a common descriptor loop of the AIT, and then is transmitted.

[Table 10]

| Data Structure | Number of Bits | Bit String Description |
|---|---|---|
| application_information_section(){ | | |
| table_id | 8 | uimsbf |
| section_syntax_indicator | 1 | bslbf |
| reserved_future_use | 1 | bslbf |
| reserved | 2 | bslbf |
| section_length | 12 | uimsbf |
| application_type | 16 | uimsbf |
| reserved | 2 | bslbf |
| version_number | 5 | uimsbf |
| current_next_indicator | 1 | bslbf |
| section_number | 8 | uimsbf |
| last_section_number | 8 | uimsbf |
| reserved_future_use | 4 | bslbf |
| common_descriptors_length | 12 | uimsbf |
| for (i=0, i<N; i++) { | | |

(continued)

| Data Structure | Number of Bits | Bit String Description |
|---|---|---|
| descriptor() | | |
| } | | |
| reserved_future_use | 4 | bslbf |
| application_loop_length | 12 | uimsbf |
| for (i=0, i<N; i++) { | | |
| application_identifier() | | |
| application_control_code | 8 | uimsbf |
| reserved_future_use | 4 | bslbf |
| application_descriptors_loop_length | 12 | uimsbf |
| for (j=0; j<M; ; j++) { | | |
| descriptor() | | |
| } | | |
| } | | |
| CRC_32 | 32 | rpchof |
| } | | |

Table 11 shows a structure of a security policy descriptor to be newly defined.

[Table 11]

| Data Structure | Number of Bits | Bit String Description |
|---|---|---|
| security_policy_descriptor(){ | | |
| descriptor_tag | 8 | uimsbf |
| descriptor_length | 8 | uimsbf |
| policy_level | 3 | bslbf |
| reserved_future_use | 5 | bslbf |
| } | | |

(4) Emergency alert broadcast and emergency earthquake report (EWS/EEW): the policy level is determined using emergency information sent from the broadcasting station. It is assumed that the receiver previously stores the relationship between emergency information and the policy level. The receiver monitors an activation flag for TMCC emergency alert broadcasting in the case of emergency alert broadcasting, and monitors a character super management packet in the case of emergency earthquake report, thereby detecting the occurrence and termination of the emergency information, thus enabling determination of the policy level at that time. The relationship with the ARIB standard is described in the ARIB STD-B31, 3.15 and the ARIB STD-B24 Part 1, Sub-Part 3, Chapter 9.

Here, each of the above formats (1) to (4) may be simultaneously sent in parallel. Accordingly, it is necessary to previously determine which format used for transmission is prioritized to determine the policy level. The priority order is as follows.

$$EWS/EEW > AIT + > EIT + > EIT$$

Based on that priority order, the receiver determines the policy level, thereby enabling a window presentation control that prioritizes an emergent event based on the intent of the broadcasting organization.

[4.3.4 Example of Window Presentation Control]

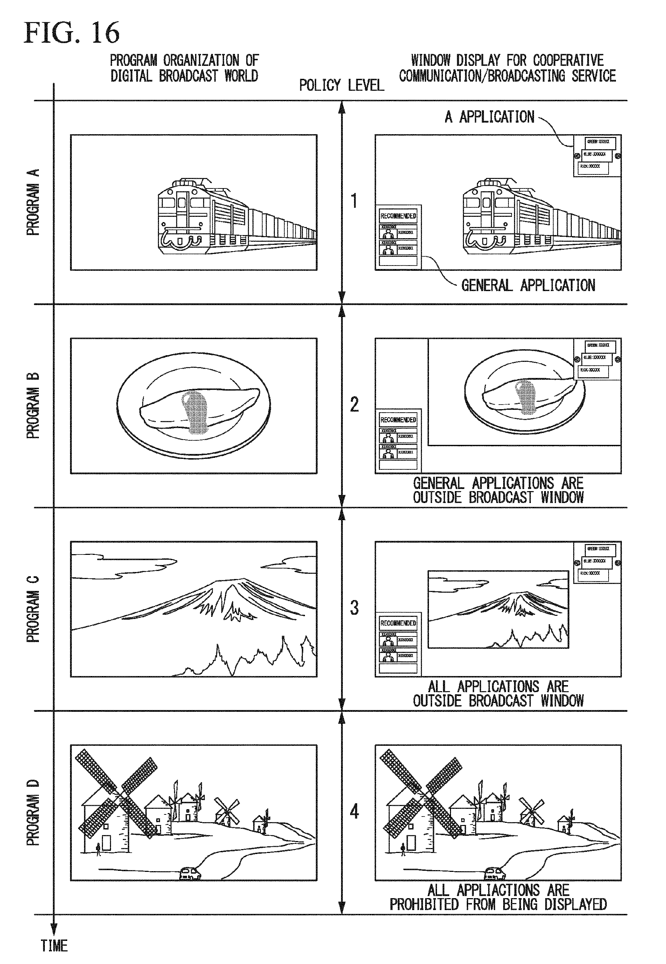

FIG. 16 illustrates an example of a window presentation control in accordance with the policy level.

In a case where the policy level of a program is "1", both an application window for an A application and an application window for a general application are allowed to be overlay-displayed on a broadcast window.

In a case where the policy level of the program is "2", only the application window for the A application is allowed to be overlay-displayed on the broadcast window. The application window for the general application is prohibited from being overlay-displayed on the broadcast window, and is only allowed to be displayed outside the broadcast window.

In a case where the policy level of the program is "3", both the application window for the A application and the application window for the general application are allowed to be displayed. However, all the application windows are prohibited from being overlay-displayed on the broadcast window, and is only allowed to be displayed outside the broadcast window.

In a case where the policy level of the program is "4", only a full-display of the broadcast window is allowed.

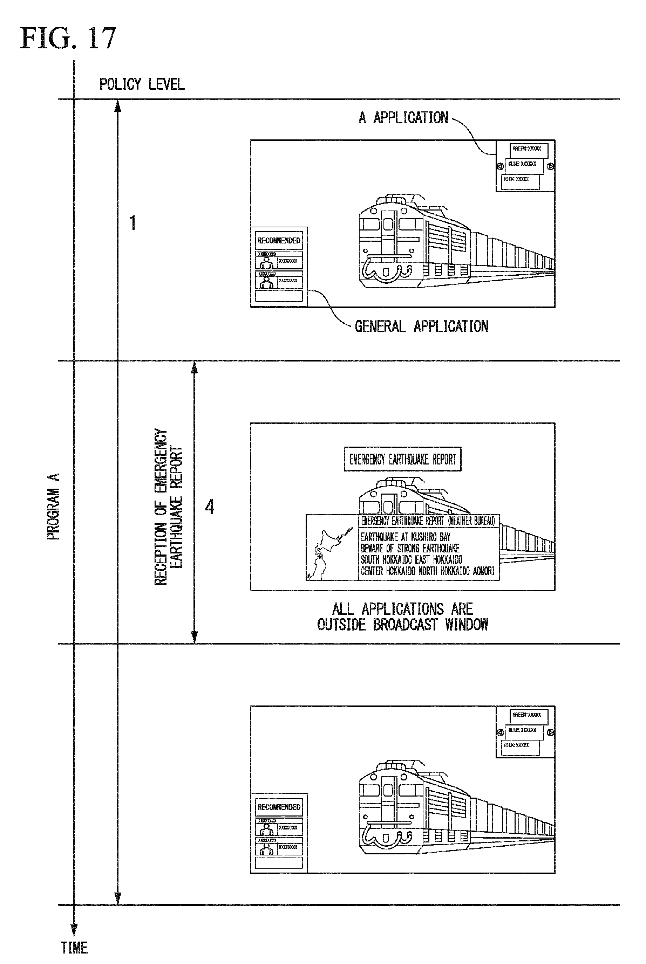

FIG. 17 illustrates an example of a presentation control at the time of a receipt of emergency earthquake report. In a case where the policy level of program A is "1", in the broadcasting time zone of program A, both an application window for an A application and an application window for a general application are overlay-displayed on a broadcast window. Even in the broadcasting time zone of program A, however, the receiver determines the policy level in the time zone where an emergency earthquake report is occurring to be the policy level "4" of the emergency earthquake report. For this reason, even in the broadcasting time zone of program A, during in the time zone where an emergency earthquake report is occurring, the receiver prohibits both the application window for the A application and the application window for the general application from being overlay-displayed on the broadcast window.

[Explanation of Embodiments of Present Invention To Which Aforementioned Cooperative Communication/Broadcasting System Is Applied]

Hereinafter, an embodiment of the present invention shown in FIG. 1 is explained.

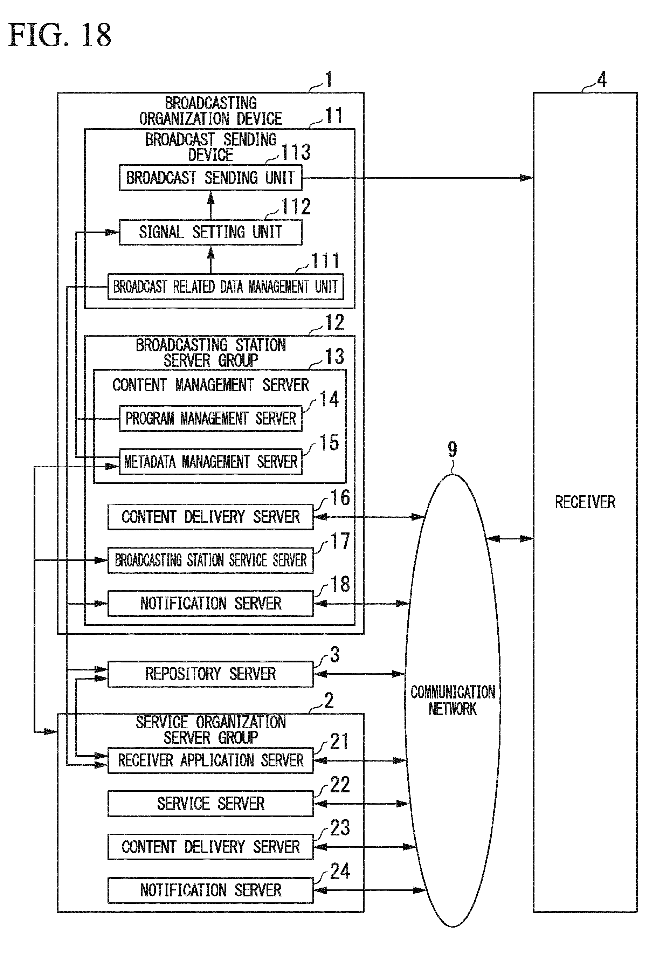

FIG. 18 is a diagram illustrating the entire configuration of a cooperative communication/broadcasting system according to an embodiment of the present invention. As shown in FIG. 18, the cooperative communication/broadcasting system of the present embodiment includes: a broadcasting organization device 1 owned by a broadcasting station; a service organization server group 2 owned by a service organization; a repository server 3 owned by a system manager; and a receiver 4 owned by a viewer. In FIG. 18, only one receiver 4 is shown, but multiple receivers 4 are provided actually.

The broadcasting organization device 1 includes a broadcasting sending device 11 and a broadcasting station server group 12.

The broadcasting sending device 11 corresponds to the broadcasting station facility shown in FIG. 3. The broadcasting sending device 11 is a broadcasting facility for digital broadcasting, which includes a program organization facility, a program sending facility, a transmission facility, and the like.

The broadcasting sending device 11 includes a broadcast related data management unit 111, a signal setting unit 112, and a broadcast sending unit 113.

The broadcast related data management unit 111 manages program security policy data of each program, application security policy data of an A application, other policy data, and the like.

The program security policy data includes policy level data indicating the policy level of a program, an application ID of an application bounded to a program, a control code for the application bound to the program, and the like.

The application security policy data includes information specifying the program to which the application is bound, protocol identification of the application, location information, and the like. The location information indicates the stored position (repository) of the application, such as a URL of the receiver application server 21 or the repository server 3, which can download an application. The protocol identification indicates whether the application is transmitted by broadcasting or communication.

Here, only an A application is bound to a program.

The policy data includes presentation rule data and a policy level table.

The presentation rule data is data that describes a presentation method for each policy level. The presentation method includes a window displaying method and a sound outputting method. The window displaying method includes, for example, a method of displaying only a broadcast window (an image of a program), a method of overlay-displaying application windows for an A application and a general application (images of applications) on the broadcast window or displaying the application windows outside the broadcast window, a method of overlay-displaying only the application window for the A application on the broadcast window and displaying the application window for the general application outside the broadcast window, and the like. The sound outputting method includes, for example, a method of outputting only the sound of a broadcast program, a method of outputting the sound of the broadcast program independently or mixed with the sound of an A application or a general application, and the like.

The policy level table is data that describes the policy level associated with the genre of a program, and the policy level of each event. An event means, for example, the contents of broadcast that does not necessarily occur in cooperation with a program, such as an emergency alert signal or an emergency earthquake report.

The signal setting unit 112 sets various data to a broadcasting signal to be transmitted by a broadcast sending unit 113. The signal setting unit 112 sets an ATT and policy level data of a program to a broadcasting signal based on the program security policy data and the application security policy data which are managed by the broadcast related data management unit 111. The signal setting unit 112 multiplexes the AIT of the application bound to the program with the broadcasting signal (broadcasting TS) as an independent ES, or sets the AIT to a data carousel. Alternatively, the signal setting unit 112 sets to an EIT, information similar to the AIT of the application bound to the program. Additionally, the signal setting unit 112 sets the policy data of the program to the EIT (table 5) or the AIT (table 11). Here, in a case where the policy level associated with the genre of the program is used, the policy level data need not be set to the broadcasting signal. Further, the signal setting unit 112 sets the policy level data managed by the broadcast related data management unit 111 to the broadcasting signal in section format, to an engineering service, or to a data carousel.

The broadcast sending unit 113 transmits a broadcasting signal of a digital broadcast. The broadcasting signal includes information set by the signal setting unit 112.

The broadcasting station server group 12 corresponds to the broadcasting station server group shown in FIG. 3. The broadcasting station server group 12 includes a content management server 13, a content delivery server 16, a broadcasting station service server 17, and a notification server 18.

The content management server 13 includes a program management server 14 and a metadata management server 15. The program management server 14 manages a program already broadcast or a program to be broadcast. The metadata management server 15 manages metadata related to each program. Metadata includes, for example, data concerning a program title, a program ID, a program summary, casts, the broadcast date, a script, a caption, and an explanation.

The content delivery server 16 is connected to the receiver 4 via a communication network 9, such as the Internet. The content delivery server 16 delivers content data of content requested by the receiver 4.

The broadcasting station service server 17 transmits to the service organization server group 2, content data of a service provided by a broadcasting station. The service provided by the broadcasting station includes, for example, a social networking service, a blog service, and the like.

The notification server 18 is connected to the receiver 4 via the communication network 9. Based on the program security policy data and the application security policy data which are acquired from the broadcast related data management unit 111 of the broadcast sending device 11, the notification server 18 delivers to the receiver 4, the AIT of the application bound to the program (FIG. 6) and the policy data of the program. Additionally, the notification server 18 delivers to the receiver 4, the policy data acquired from the broadcast related data management unit 111 of the broadcast sending device 11. Here, in some cases, part or all of those information are not delivered from the notification server 18, instead, are transmitted by the broadcast sending unit 13 of the broadcast sending device 11 by means of a broadcasting signal.

The service organization server group 2 corresponds to the service organization server group shown in FIG. 3. The service organization server group 2 includes a receiver application server 21, a service server 22, a content delivery server 23, and a notification server 24. The receiver application server 21, the service server 22, the content delivery server 23, and the notification server 24 are connected to the receiver 4 via the communication network 9.

The receiver application server 21 manages each application and delivers an application file to the receiver 4.

The service server 22 includes, for example, a multilingual caption server, a speech rate conversion sound server, a social TV server, a recommendation server, a bookmark server, and the like. The service server 22 delivers content data of the service requested by the receiver 4.

The content delivery server 23 includes, for example, a VOD delivery server, a caption delivery server, or a multi-view delivery server. The content delivery server 23 delivers content data of the content requested by the receiver 4.

The notification server 24 transmits the AIT of applications (FIG. 6) to the receiver 4. Here, in the case of an A application, the notification server 24 may transmit the AIT (FIG. 6) based on the program security policy data and the application security policy data which are acquired from the broadcast related data management unit 111 of the broadcast sending device 11.

The repository server 3 corresponds to the repository shown in FIG. 3, and is connected to the receiver 4 via the communication network 9. The repository server 3 electrically signs an application file (application program) generated by the service organization, and transmits to the receiver 4, data required for authentication of the electric signature of the application file (application program). Additionally, the repository server 3 transmits to the receiver 4, data indicating a list of A applications and location information of those A applications. Here, the repository server 3 may transmit to the receiver 4, the application file of the electrically signed A application, and the receiver application server 21 may receive from the repository server 3, and transmit to the receiver 4, the application file of the electrically signed A application.

Additionally, the repository server 3 may transmit to the receiver 4, the AIT of the A applications bound to the program (FIG. 6), based on the program security policy data and the application security policy data which are received from the broadcast related data management unit 111 of the broadcast sending device 11.

The receiver 4 corresponds to the receiver shown in FIG. 3 and is a device, such as a television receiver, a set-top box, a personal computer, or a mobile terminal.

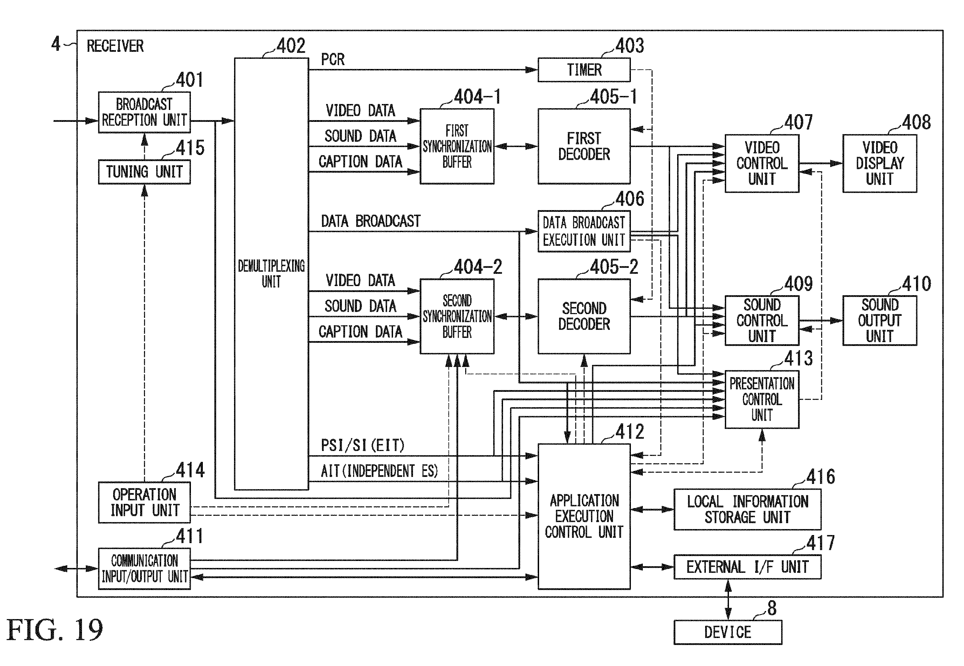

FIG. 19 is a functional block diagram illustrating an internal configuration of the receiver 4. As shown in FIG. 19, the receiver 4 includes: a broadcast reception unit 401; a demultiplexing unit 402; a timer 403; a first synchronization buffer 404-1; a second synchronization buffer 404-2; a first decoder 405-1; a second decoder 405-2; a data broadcast execution unit 406; a video control unit 407; a video display unit 408; a sound control unit 409; a sound output unit 410; a communication input/output unit 411; an application execution control unit 412; a presentation control unit 413; an operation input unit 414; a tuning unit 415; a local information storage unit 416; and an external I/F unit 417.

The broadcast reception unit 401 is a tuner that receives a broadcasting signal. The broadcasting signal is any one or both of a wireless broadcasting signal and a wired broadcasting signal. The wireless broadcasting signal is a signal acquired by receiving, using a reception antenna, a broadcasting wave (ground wave) transmitted from a transmission antenna on the broadcasting station side, or a satellite wave relayed by a satellite. The wired broadcasting signal is a signal transmitted from the broadcasting station side via an optical cable or a coaxial cable. The broadcasting reception unit 401 receives and demodulates the broadcasting signal and outputs a broadcasting stream (TS).

The demultiplexing unit 402 is a demutliplexer and demultiplexes the broadcasting stream supplied from the broadcasting reception unit 401 into various data, such as a PCR (program clock reference), image data, sound data, caption data, a data broadcast, PSI (program specific information)/SI (service information), and an AIT transmitted by an independent elementary stream (ES). Here, there are cases where the AIT is included in a data broadcast, and where the contents similar to the AIT are set to an EIT constituting the SI. Additionally, there is a case where the demultiplexing unit 402 demultiplexes an application file from a broadcasting signal and outputs the application file.

The communication input/output unit 411 inputs/outputs data by communication via the communication network 9. The communication input/output unit 411 outputs to the application execution control unit 412, the AIT and the application file which are transmitted via the communication network 9. Additionally, the communication input/output unit 411 outputs to the presentation control unit 413, the policy level data and the policy data of the program transmitted via the communication network 9. Further, in accordance with an instruction from the application executed by the application execution control unit 412, the communication input/output unit 411 receives via the communication network 9, content data delivered from the content delivery server 16 or the content delivery server 23, and content data delivered from the service server 22, and outputs the received data to the second synchronization buffer 404-2.

The operation input unit 414 is an interface that receives an operation of a viewer. The operation input unit 414 includes: for example, a reception device that receives information input by a viewer from a remote controller, a cellular phone, a tablet terminal, or the like; a keyboard; a mouse; and the like. The operation input unit 414 outputs to the tuning unit 415, an instruction to select a medium (terrestrial/BS) or a channel input by the viewer. Additionally, the operation input unit 414 outputs to the application execution control unit 412, an instruction to initiate or terminate a cooperative communication/broadcasting service, and an instruction with respect to an application.

The tuning unit 415 controls the medium or the channel to be received by the broadcasting reception unit 401, in accordance with the operation input to the operation input unit 414.

The data broadcast execution unit 406 executes a data broadcast application transmitted by means of a digital broadcasting signal, and outputs image (graphic) data of a data broadcast to the video control unit 407. The data broadcast execution unit 406 includes an API for activating an application of a cooperative communication/broadcasting service. In a case where the data broadcast execution unit 406 executes the data broadcast application, and the API for activating the application of the cooperative communication/broadcasting service is invoked, the data broadcast execution unit 406 instructs the application execution control unit 412 to activate the application. Additionally, the data broadcast execution unit 406 acquires from the data broadcast, an AIT or an application file transmitted by data carousel, and outputs the acquired items to the application execution control unit 412. Further, the data broadcast execution unit 406 acquires from the data broadcast, policy data transmitted by data carousel, and outputs the acquired data to the presentation control unit 413.

The application execution control unit 412 executes the application of the cooperative communication/broadcasting service. In accordance with the application being executed, the application execution control unit 412 instructs the second decoder 405-2 to decode the content data received from the content delivery server 16, the content delivery server 23, or the service server 22. The content data includes any one or both of image data and sound data. The image data includes, for example, a moving image, a still image, text data, and the like. Additionally, in accordance with the application being executed, the application execution control unit 412 outputs graphic (image) data and video control instructions to the video control unit 407, and outputs sound data and sound control instructions to the sound control unit 409.

The timer 403 outputs a value of a timer counter. The timer 403 adjusts a frequency of an oscillator using the value of the timer counter indicated by a PCR, and thus synchronizes the time with that on the broadcast transmission side.

The first synchronization buffer 404-1 stores the image data, the sound data, and the caption data, which are output from the demultiplexing unit 402. A PES (packetized elementary stream) generated from the elementary stream (ES) including the image data, the sound data, and the caption data is segmented into transport packets constituting a broadcasting stream (TS) and is set thereto. A header of the PES includes a PTS (presentation time stamp). In accordance with an instruction from the first decoder 405-1, the first synchronization buffer 404-1 outputs, in units of PES packets, the image data, the sound data, and the caption data which are output from the demultiplexing unit 402.

The second synchronization buffer 404-2 stores content data of the content or service received by the communication input/output unit 411. Alternatively, in accordance with an instruction of the viewer input through the operation input unit 414, the second synchronization buffer 404-2 stores the image data, the sound data, and the caption data which are output from the demultiplexing unit 402. In accordance with an instruction from the second decoder 405-2, the demultiplexing unit 402-2 outputs, in units of PES packets, the stored content data, or the image data, the sound data, and the caption data of the program.

The first decoder 405-1 specifies a PES packet stored in the first synchronization buffer 404-1 set with the PTS associated with the time output from the timer 403. Then, the first decoder 405-1 reads from the specified PES packet, the image data, the sound data, and the caption data, which are encoded. Then, the first decoder 405-1 decodes and outputs the read data.

The second synchronization buffer 405-2 specifies the content data or the PES packet of the program, which is stored in the second synchronization buffer 404-2 set with the PTS associated with the time output from the timer 403. Then, the second decoder 405-2 reads from the specified PES packet, the image data, the sound data, and the caption data, which are encoded. Then, the second decoder 405-2 decodes and outputs the read data.

The presentation control unit 413 determines a presentation method (a window displaying method and a sound outputting method) in accordance with the policy level of the selected program or the policy level of the occurring event, and the presentation rule data. The presentation control unit 413 instructs the video control unit 407 to display, by the determined window displaying method, a broadcast window, an application window for an A application, and an application window for a general application. Further, the presentation control unit 413 instructs the sound control unit 409 to output, by the determined sound outputting method, the sound based on the sound data of the broadcast, the sound based on the sound data of the A application, and the sound based on the sound data of the general application.

The video control unit 407 controls the image display unit 408 to display, in accordance with the window displaying method instructed from the presentation control unit 413 or the application execution control unit 412, the broadcast window based on image data and the caption data of the program output from the first decoder 405-1, and the application windows for the A application and the general application based on the image data of the content data output from the second decoder 405-2. Additionally, in a case where graphic (image) data is output from the application execution control unit 412 by execution of an application, the video control unit 407 controls the image display unit 408 to simultaneously display a window based on that image data in accordance with the window displaying method instructed from the presentation control unit 413 or the application execution control unit 412. Here, there is a case where image data and caption data of another program are output from the second decoder 405-2.

The image display unit 408 is a general display and displays windows for broadcasts and applications. For example, the image display unit 408 displays, on the broadcast window for a program, a moving image, a still image, and text of the content data received from the communication network 9, an application window such as a graphic or the like output from the application execution control unit 412 by execution of an application, or an image with which a broadcast window of another program is combined.

The sound control unit 409 controls the sound output unit 410 to output, in accordance with the sound outputting method instructed from the presentation control unit 413 or the application execution control unit 412, the sound based on the sound data of the program output from the first decoder 405-1, the sound of the A application or the general application based on the sound data of the content data output from the second decoder 405-2, and the sound data output from the application execution control unit 412 by execution of the application. Here, there is a case where sound data of another program is output from the second decoder 405-2. The sound output unit 410 is a general speaker and outputs the sound of broadcasts and applications.

The local information storing unit 416 stores various data, such as user information.

The external interface unit (hereinafter described as "external I/F unit") 417 transmits/receives data to/from a device 8 connected to a home network, such as a LAN (local area network). The device 8 is a terminal that cooperates with the receiver 4, such as a personal computer, a cellular phone, a tablet, a smart phone, or a PDA.

Here, in a case where the receiver 4 is a set-top box, or the like, the image display unit 408 and the sound output unit 410 are external devices to be connected to the receiver 4.

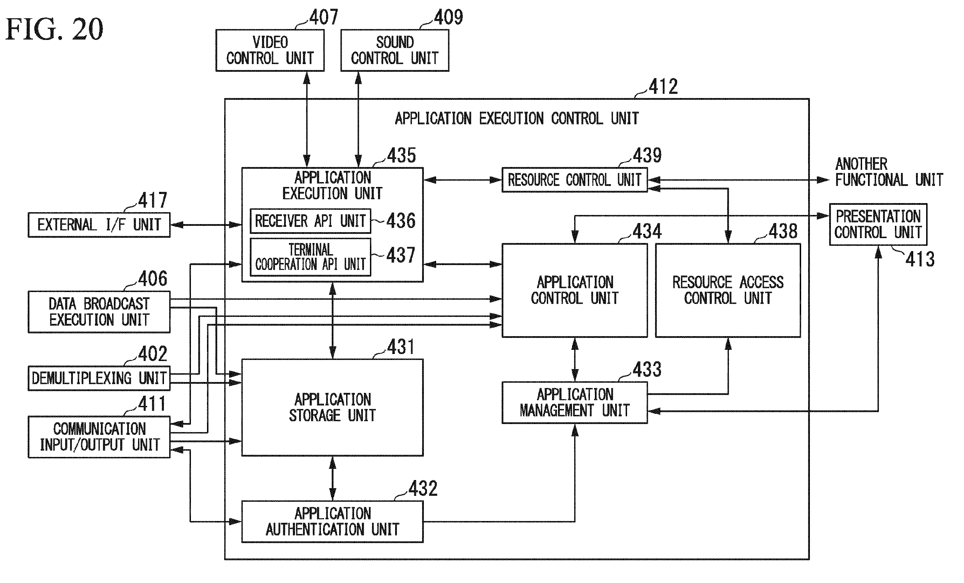

FIG. 20 is a block diagram illustrating a detailed configuration of the application execution control unit 412. As shown in FIG. 20, the application execution control unit 412 includes: an application storage unit 431; an application authentication unit 432; an application management unit 433; an application control unit 434; an application execution unit 435; a resource access control unit 438; and a resource control unit 439.

The application storage unit 431 stores the application file that the communication input/output unit 411 receives via the communication network 9, or the application file that the data broadcast execution unit 406 acquires from the data broadcast, or the application file that the demultiplexing unit 402 demultiplexes from the broadcasting signal. The application file may be previously stored in the application storage unit 431 at the time of shipping. The application storage unit 431 includes a supplemental storage unit, such as a main storage device and a disk. For example, an application file is stored in a disk and read by a main storage device at the time of execution. In this case, an application file of the application to be executed on-the-fly is not stored in a disk, but is stored only in the main storage device and is deleted from the main storage device when execution ends.

The application authentication unit 432 receives from the repository server 3, data required for authentication of an electric signature. Then, the application authentication unit 432 verifies the electric signature added to the application file (application program) using the received data. For example, the application authentication unit 432 uses the public key received from the repository server 3, and thus decodes the electrically-signed application file. In a case where a predetermined data string is acquired as a result of that decoding, the application authentication unit 432 determines that the verification of the electric signature succeeds. In a case where the verification of the electric signature succeeds, the application authentication unit 432 determines the application to be an A application. In a case where the verification of the electric signature fails or in a case where no electric signature is added, the application authentication unit 432 determines the application to be a general application.

The application management unit 433 manages an activated or terminated state of the application executed by the application execution unit 435, and an output state of the activated application. The output state is information indicating whether or not an image or sound is being output from the running application. The application management unit 433 receives an inquiry from the presentation control unit 413, and returns a response indicating whether the activated application is an A application or a general application.

The application control unit 434 controls the application execution unit 435 to activate or terminate an application, in accordance with a control code with respect to the application bound to a program, or an instruction with respect to the application which is input by the operation input unit 414. Additionally, the application control unit 434 instructs the application execution unit 435 to activate the application that the data broadcast execution unit 406 instructs to activate. In a case where a channel is changed in accordance with an input from the operation input unit 414, the application control unit 434 instructs the application execution unit 435 to terminate the application bound to the program on the pre-change channel and activate the application bound to the program on the post-change channel. Here, the application control unit 434 acquires the application bound to the program and a control code with respect to the bound application from the AIT included in the independent ES of the broadcasting signal or the data broadcast, the information similar to the AIT which is acquired from the EIT of the broadcasting signal, or the AIT received from the notification sever 18 or the notification server 24 via the communication input/output unit 411. Additionally, the application control unit 434 transmits a download request for an application file to a transmission destination indicated by the location information set to the AIT. The repository server 3 receiving the download request from the receiver 4, or the receiver application server 21 delivers the application file to the receiver 4.

The application execution unit 435 includes a receiver API unit 436 and a terminal cooperation API unit 437. In accordance with an instruction from the application control unit 434, the application execution unit 435 reads an application program of the application, the activation of which is instructed, and executes the read application program. By the application execution unit 435 executing the application program, the application runs on the receiver 4, and the application execution unit 435 requests content from the content delivery server 16 or the content delivery server 23 via the communication network 9, or requests service from the service server 22. Additionally, by the application program being executed, the application execution unit 435 outputs the graphic data or the video control instruction to the video control unit 407, or outputs sound data or a sound control instruction to the sound control unit 409.

The receiver API unit 436 executes a receiver API that is an API for utilizing each resource in the receiver 4 when the application execution unit 435 executes an application. By the receiver API unit 436 executing the receiver API, the resources in the receiver 4 become available from the application program executed by the application execution unit 435.

The terminal cooperation API unit 437 executes a terminal cooperation API that is an API for the device 8 on a home network accessible via the external I/F unit 417 or a device to be connected via the communication network 9 to utilize the functions of the receiver 4. By the terminal cooperation API unit 437 executing the terminal cooperation API, the resources in the receiver 4 becomes available from the device 8 to be connected via the home network or the device to be connected via the communication network 9.

The resource control unit 439 controls accesses by the receiver API unit 436 and the terminal cooperation API unit 437 to each functional unit that is a resource in the receiver 4.

The resource access control unit 438 controls whether or not to allow the receiver API unit 436 and the terminal cooperation API unit 437 to access each functional unit in the receiver 4. The resource access control unit 438 performs this control in accordance with whether the application that is the calling source of each API to be executed by the receiver API unit 436 and the terminal cooperation API unit 437 is an A application or a general application.

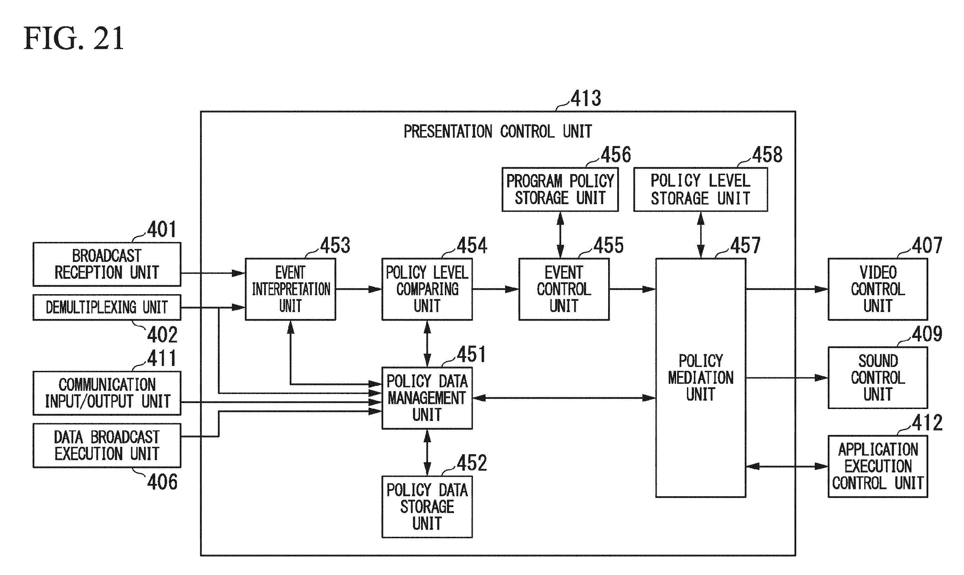

FIG. 21 is a block diagram illustrating a detailed configuration of the presentation control unit 413. As shown in FIG. 21, the presentation control unit 413 includes: a policy data management unit 451; a policy data storage unit 452; an event interpretation unit 453; a policy level comparing unit 454; an event control unit 455; a program policy storage unit 456; a policy mediation unit 457; and a policy level storage unit 458.

The policy data storage unit 452 stores policy data including the presentation rule data and the policy level table. The policy data management unit 451 manages the policy data stored in the policy data storage unit 452. The policy data management unit 451 outputs to the policy level comparing unit 454, the policy level table read from the policy data storage unit 452. Additionally, the policy data management unit 451 outputs to the policy mediation unit 457, the presentation rule data read from the policy data storage unit 452. Further, the policy data management unit 451 receives from the demultiplexing unit 402 or the data broadcast execution unit 406, the policy data transmitted by broadcasting. Moreover, the policy data management unit 451 receives from the communication input/output unit 411, the policy data transmitted by communication. The policy data management unit 451 updates the policy data stored in the policy data storage unit 452 with the policy data transmitted by broadcasting or communication.

The event interpretation unit 453 analyzes the broadcasting signal received by the broadcast reception unit 401, and the data broadcast and the caption data demultiplexed by the demultiplexing unit 402, thus detecting occurrence or termination of an event. Upon detecting occurrence or termination of an event, the event interpretation unit 453 outputs to the policy level comparing unit 454, the event number of the detected event and status data indicating the occurrence or termination.

The policy level comparing unit 454 refers to the policy level table and determines (compares) the policy level associated with a genre of each program indicated by the EIT and the policy level associated with the event specified by the event number. The policy level comparing unit 454 outputs to the event control unit 455, data indicating the broadcast start time and the broadcast end time of the program, and the policy level of that program (hereinafter described as the "program policy level"), which are acquired from the SI received from the demultiplxeing unit 402. Here, in a case where the program policy level is set to the EIT, the policy level comparing unit 454 outputs to the event control unit 455, the data indicating the broadcast start time and the broadcast end time, and the policy level of that program acquired from the EIT.

Additionally, in a case where the policy level comparing unit 454 acquires the program policy level from the AIT, the policy level comparing unit 454 outputs the acquired program policy level to the policy mediation unit 457. Further, the policy level comparing unit 454 outputs to the policy mediation unit 457, the policy level determined in accordance with the event number (hereinafter described as the "trigger policy level").

The program policy storage unit 456 stores the program start time and the program end time, and the program policy level, in association with one another. The event control unit 455 associates the data indicating the program start time and the program end time, and the program policy level, which are received from the policy level comparing unit 454, and writes those information in the program policy storage unit 456. Based on those information stored in the program policy storage unit 456, the event control unit 455 manages the time at which a display control is to be performed. In a case where the event control unit 455 refers to the data indicating the program start time stored in the program policy storage unit 456, and detects that it becomes the time at which to communicate the execution time, the event control unit 455 outputs to the policy mediation unit 457, the execution time and the program policy level associated with that execution time.

The policy level storage unit 458 stores the execution time and the program policy level which are input to the policy mediation unit 457, and the trigger policy level and the status data. The policy mediation unit 457 determines the policy level based on the execution time and the program policy level which are received from the event control unit 455, and the trigger policy level received from the policy level comparing unit 454. For example, the trigger policy level may be determined as the policy level. The greater one of the program policy level and the trigger policy level may be determined as the policy level.

Here, in a case where the program policy level acquired by the AIT from the policy level comparing unit 454, the policy mediation unit 457 prioritizes the program policy level received from the policy level comparing unit 454 over the program policy level received from the event control unit 455. In other words, the policy mediation unit 457 determines the policy level based on the program policy level acquired by the AIT and the trigger policy level. The policy mediation unit 457 refers to the presentation rule data, and determines a window displaying method and a sound outputting method (presentation method) based on the determined policy level, information indicating whether or not the running application acquired from the application management unit 433 is an A application, and the output state. The policy mediation unit 457 outputs the determined window displaying method to the video control unit 407, and outputs the determined sound outputting method to the sound control unit 409.

Here, returning to FIG. 1, the operation reception unit 474, the activation request signal acquiring unit 471, the application information acquiring unit 472, the activation control unit 473, and the termination control unit 481 are explained.

The operation reception unit 474 is an operation device that transmits an operation signal in accordance with an operation of a viewer (operator). The operation reception unit 474 includes, for example, a remote controller that can remote control the receiver 4 (hereinafter, "remocon"), an operation panel provided on a main body of the receiver 4, and the like. The remocon includes: a mobile terminal (a cellular phone, a smart phone, a tablet terminal, or the like) that is executing an application program for implementing the function of the remote controller; a computer device; a car navigation terminal; and the like.

The operation reception unit 474 includes an operation unit for operating the receiver 4. Here, in the present embodiment, the operation unit of the operation reception unit 474 includes operational buttons similar to those provided on conventional remote controllers for operating televisions, such as a power button, numerical buttons from "0" to "9" (channel specification buttons), a channel change button, a sound adjustment button, and a data broadcasting service button. The data broadcasting service button is an operational button that switches between a display and a non-display of a data broadcast each time that button is pressed while the receiver 4 receives the data broadcast. The data broadcasting service button is also referred to as a "data broadcast button", a "d button", or a "D button".

Additionally, the operational unit of the operation reception unit 474 is provided with a cooperative communication/broadcasting service button not shown in FIG. 1. The cooperative communication/broadcasting service button is an operational button for controlling the receiver 4 to initiate a receipt of a cooperative communication/broadcasting service. The cooperative communication/broadcasting service button is also referred to as a "cooperative communication/broadcasting button", an "h button", or an "H button". When the cooperative communication/broadcasting service button is pressed, the operation reception unit 474 transmits an activation request signal for requesting an initiation of a stream dependent service of cooperative communication/broadcasting services.

Here, the operation unit of the operation reception unit 474 may be one implemented by, for example, a touch panel and a graphical user interface (GUI).

The operation input unit 414 receives the operation signal transmitted by the operation reception unit 474.

The activation request signal acquiring unit 471 of the operation input unit 414 acquires the activation request signal from the operation signal received by the operation input unit 414 to generate an activation request command. Then, the activation request signal acquiring unit 474 provides the activation request command to the application control unit 434 of the application execution control unit 412.

Additionally, in a case where the operation input unit 414 receives an operation signal transmitted by an operation of a broadcasting service return button, such as an operation of the numerical buttons or the channel change button provided on the operation unit of the operation reception unit 474, the operation input unit 414 generates a termination request command, and provides the termination request command to the application control unit 434.

The application information acquiring unit 472 of the application control unit 434 acquires an AIT (application information table) periodically or irregularly provided from the demultiplexing unit 402. Specifically, the application information acquiring unit 472 periodically or irregularly acquires an ES (elementary stream) of the AIT retrieved from the TS (transport stream) associated with the desired channel selected from the desired medium selected by a viewer.

The AIT is information including information concerning an application, control information with respect to the application, and information that specifies the application. As shown in FIG. 6, the information concerning an application includes the application name (appName) and an application ID (orgId, appId). The control information with respect to the application includes the application control code (application_control_code) shown in the above table 7. The application control code is, for example, data for controlling the life cycle of the application. The information that specifies the application includes location information. The location information is information that specifies the storage place of an application file and specifies the application file. The location information for a stream dependent service is a URL (uniform resource locator) of the receiver application server 21 that stores the application file or the repository server 3 (application server).

The application information acquiring unit 472 retrieves from the acquired AIT, the application control code and the application ID. Then, the application information acquiring unit 472 provides the application control code and the application ID to the termination control unit 481.

Here, the application information acquiring unit 472 may retrieve from the acquired AIT, the application name, instead of or in addition to, the application ID, and provide the application name to the termination control unit 481.

Additionally, upon acquiring the activation request command provided from the activation request signal acquiring unit 471, the application information acquiring unit 472 retrieves the application name and the location information, in addition to the application control code, from the AIT acquired on or immediately after the timing of acquiring the activation request command. The application name, the application control code, and the location information, which are retrieved by the application information acquiring unit 472, are called application information. The application information acquiring unit 472 provides the retrieved application information to the activation control unit 473.

The activation control unit 473 acquires the application information provided from the application information acquiring unit 472, that is, the application name, the application control code, and the location information. In a case where it is determined that the application control code is data indicating a stand-by of the application, the activation control unit 473 controls activation of the application associated with the application information.

Specifically, in a case where it is determined that the application control code is data indicating a stand-by of the application, the activation control unit 473 generates an application request command, and provides the application request command to the communication input/output unit 411. In other words, the activation control unit 473 is an application requesting unit.

The data indicating the stand-by of the application is, for example, "12 (hexadecimal number)" (identification name: PRESENT) of the application control code shown in the above table 7.

Here, other than the above "12 (hexadecimal number)" (identification name: PRESENT), the data indicating the stand-by of the application may be another dedicated code assigned.

The application request command is a command which sets the location specified by the location information to a destination from which an application file is requested, and which indicates an acquisition request for that application file (download request).

Here, the activation control of an application performed by the activation control unit 473 includes controlling the application execution unit 435 to read an application file stored in the application storage unit 431, execute and initiate the read application file.

Additionally, upon retrieving the notice of acquisition of the application provided from the communication input/output unit 411, the activation control unit 473 generates an application execution request command and provides the application execution request command to the application execution unit 435.

The application execution request command is a command indicating a request for initiating execution of an application associated with the notice of acquisition of the application file.

Upon acquiring the termination request command provided from the operation input unit 414, the termination control unit 481 of the application control unit 434 detects from the application execution unit 435, a process state of the application (application execution state) from the application execution unit 435. In a case where the detected application execution state is an executing state, the termination control unit 481 generates an application execution termination command and provides application execution termination command to the application execution unit 435. In other words, upon acquiring the termination request command provided from the operation input unit 414, the termination control unit 481 controls termination of the execution of the running application associated with the TS being received.

Additionally, the termination control unit 481 acquires the application control code and the application ID which are provided from the application information acquiring unit 472. In a case where the acquired application control code is determined to be data indicating termination of the execution of the application, the termination control unit 481 controls termination of the execution of the application associated with the application ID associated with that application control code.

Specifically, in a case where the acquired application control code is determined to be data indicating termination of the execution of the application, the termination control unit 481 generates an application execution termination command including an application ID associated with that application control code, and provides the application execution termination command to the application execution unit 435.

The data indicating termination of the execution of the application is, for example, "03 (hexadecimal number)" (identification name: DESTROY) of the application control code shown in the above table 7.

Here, other than the above "03 (hexadecimal number)" (identification name: DESTROY), the data indicating termination of the execution of the application may be "04 (hexadecimal number)" (identification name: KILL), "08 (hexadecimal number)" (identification name: KILL ALL), or another dedicated code assigned.

The aforementioned application execution unit 435 includes a content requesting unit (not shown) as its functional configuration. The content requesting unit generates a content request command for requesting content data required for a process of executing an application from the content delivery server 16 of the broadcasting station server group 12 or the content delivery server 23 of the service organization server group 2. Then, the content requesting unit provides the content request command to the communication input/output unit 411.

Additionally, the aforementioned communication input/output unit 411 includes an application acquiring unit and a content acquiring unit (not shown), as its functional configuration.

The application acquiring unit acquires an application file transmitted from an external server having received the application request signal transmitted by the communication input/output unit 411, such as the receiver application server 21 or the repository server 3. Then, the application acquiring unit controls the application storage unit 431 to store the application file.

The content acquiring unit acquires content data from an external server having received the content request signal transmitted by the communication input/output unit 411, such as the content delivery server 16 or the content delivery server 23. Then, the content acquiring unit provides the content data to the second synchronization buffer 404-2.

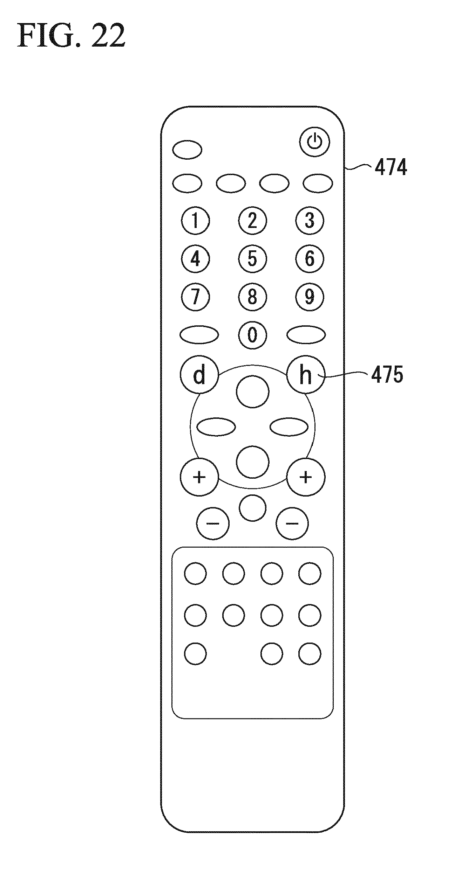

FIG. 22 is a schematic diagram illustrating a front outer shape in a case where an infrared remote controller is used as the operation reception unit 474. As shown in FIG. 22, the operation reception unit 474 is provided with a cooperative communication/broadcasting service button 475, in addition to buttons similar to those provided on a conventional remote controller for operating televisions, such as a power button, numerical buttons, a channel change button, a sound adjustment button, and a data broadcasting service button.

Next, an explanation is given with respect to a process for the receiver 4 to acquire an AIT, acquire an application file from an external server based on the AIT, execute the application, acquire related content from an external server along with the execution of the application, and present the related content, in a case where the cooperative communication/broadcasting service button 475 of the operation reception unit 474 is pressed.

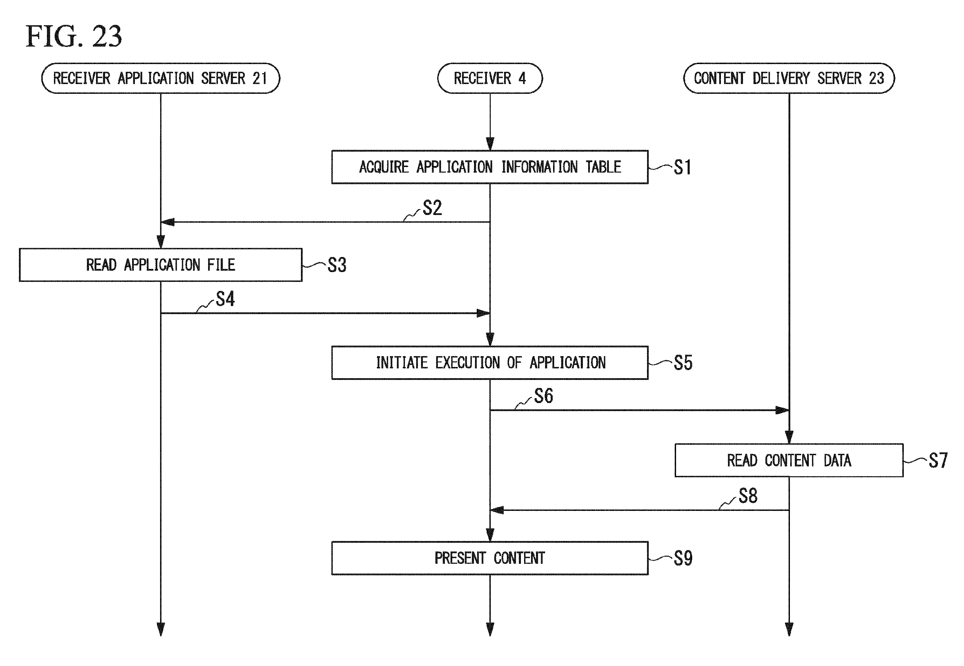

FIG. 23 is a sequence chart illustrating a procedure of a process between the receiver application server 21 and the content delivery server 23.

In step S1, upon receiving the activation request signal transmitted from the operation reception unit 474, the receiver 4 retrieves an ES of the AIT from the TS associated with the channel selected from the desired medium selected by a viewer.

Then, in step S2, in a case where the application control code included in the AIT is determined to be data indicating the stand-by of the application, the receiver 4 transmits an application request signal to the receiver application server 21.

Then, in step S3, upon receiving and acquiring the application request signal transmitted by the receiver 4, the receiver application server 21 reads an application file specified by that application request signal.

Then, in step S4, the receiver application server 21 transmits the application file to the receiver 4 having transmitted the application request signal.

Then, in step S5, the receiver 4 receives and acquires the application file transmitted by the receiver application server 21 and initiates execution of the application.

Then, in step S6, the receiver 4 transmits to the content delivery server 23, a content request signal for acquiring content data required along with the execution of the application.

Then, in step S7, upon receiving and acquiring the content request signal transmitted by the receiver 4, the content delivery server 23 reads content data specified by the content request signal.

Then, in step S8, the content delivery server 23 transmits the content data to the receiver 4 having transmitted the content request signal.

Then, in step S9, the receiver 4 receives and acquires the content data transmitted by the content delivery server 23, decodes the content, displays the decoded content and outputs the sound thereof.

Here, in FIG. 23, in a case where the repository server 3 is provided in lieu of the receiver application server 21, and in a case where the content delivery server 16 is provided in lieu of the content delivery server 23, a similar process is applied.

Next, operation of the receiver 4 receiving an operation signal transmitted from the operation reception unit 474 is explained in detail.

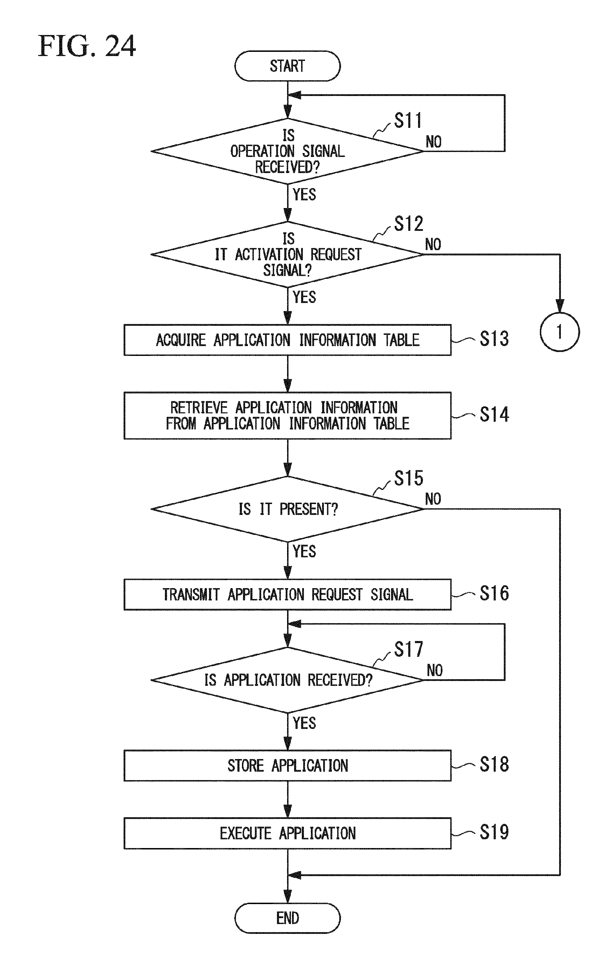

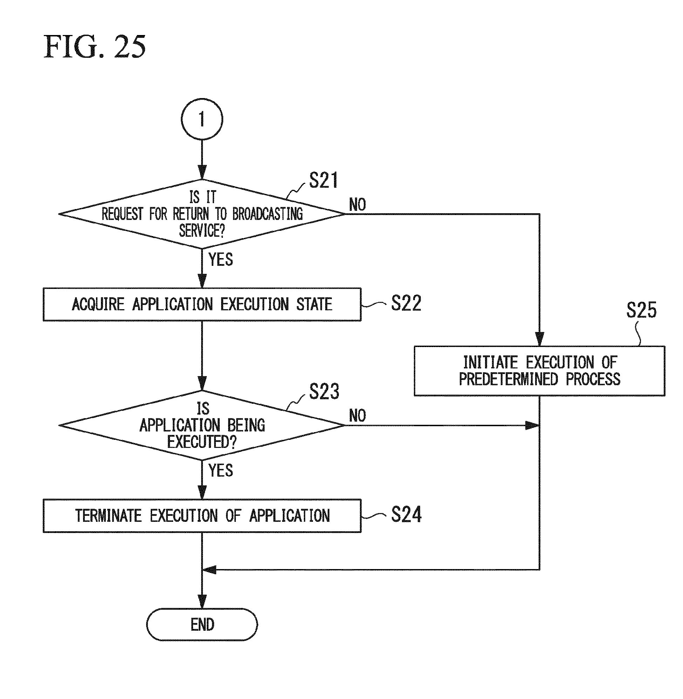

FIGS. 24 and 25 are flowcharts illustrating an operational procedure of operation in a case where the receiver 4 operates in accordance with an operation of the operation reception unit 474.

The receiver 4 initiates execution of the process shown in the present flowchart in a state of acquiring a broadcasting signal, retrieving and presenting broadcasting content from the TS associated with the medium and the channel which are selected by the viewer, that is, in a state of displaying the desired program and outputting the sound thereof.

First, in step S11, the operation input unit 414 accepts a receipt of an operation signal transmitted from the operation reception unit 474. Upon receiving the operation signal transmitted from the operation reception unit 474, the operation input unit 414 acquires that operation signal and proceeds to the process in step S 12. In a case where the received operation signal is an activation request signal in step S12 (S12: YES), the operation input unit 414 proceeds to the process in step S13. In a case where the received operation signal is not an activation request signal in step S 12 (S12: NO), the operation input unit 414 proceeds to the process in step S21 shown in FIG. 25.

In step S 13, the activation request signal acquiring unit 471 acquires the activation request signal, generates an activation request command, and provides the activation request command to the application control unit 434 of the application execution control unit 412.

Then, the application information acquiring unit 472 of the application control unit 434 acquires the activation request command provided from the activation request signal acquiring unit 471.

Then, the application information acquiring unit 472 acquires the AIT provided from the demultiplexing unit 402. This AIT is information retrieved from the TS associated with the desired channel selected from the desired medium selected by the viewer.

In step S 14, the application information acquiring unit 472 retrieves from the acquired AIT, the application name, the application control code, and the location information, as the application information, and provides the application information to the activation control unit 473.

Then, the activation control unit 473 acquires the application information provided from the application information acquiring unit 472, that are, the application name, the application control code, and the location information.

Then, in a case where the application control code is determined to be data indicating a stand-by of the application in step S 15 (S 15: YES), the activation control unit 473 proceeds to the process in step S16. In a case where the application control code is determined not to be data indicating a stand-by of the application (S 15: NO), the activation control unit 473 terminates the process of the present flowchart.

Specifically, in a case where the application control code is determined to be, for example, "12 (hexadecimal number)" (identification name: PRESENT), the activation control unit 473 proceeds to the process in step S16. In a case where the application control code is determined not to be "12 (hexadecimal number)" (identification name: PRESENT), the activation control unit 473 terminates the process of the present flowchart.

In step S16, the activation control unit 473 generates an application request command addressed to a destination of a request for an application file which is specified by the location information, and provides that application request command to the communication input/output unit 411.

Then, the communication input/output unit 411 acquires the application request command provided from the activation control unit 473, and transmits the application request command to the request destination as an application request signal. The application request signal is, for example, a signal acquired by IP (Internet protocol)-packetizing the application request command.

In other words, the communication input/output unit 411 transmits the application request signal to the receiver application server 21 or the repository server 3 that is the request destination indicated by the application request command.

Then, in step S 17, the communication input/output unit 411 accepts a receipt of the application file transmitted by the above request destination (the receiver application server 21 or the repository server 3). Upon receiving the application file transmitted by the above request destination, the communication input/output unit 411 acquires the application file and proceeds to the process in step S 18.

In step S 18, the communication input/output unit 411 provides the acquired application file to the application storage unit 431 of the application execution control unit 412, and controls the application storage unit 431 to store the application file.

Then, in step S 19, the communication input/output unit 411 provides a notice of acquisition of the application file to the activation control unit 473.

Then, the activation control unit 473 acquires the notice of the acquisition of the application file provided from the communication input/output unit 411.

Then, the activation control unit 473 generates an application execution request command with respect to an application associated with the notice of the acquisition of the application file. Then, the activation control unit 473 provides the application execution request command to the application execution unit 435.

Then, the application execution unit 435 acquires the application execution request command provided from the activation control unit 473.

Then, the application execution unit 435 reads from the application storage unit 431, an application file specified by the acquired application execution request command, initiates execution of the application, and then terminates the process of the present flowchart.

On the other hand, in a case where the operation signal is an operation signal transmitted by an operation of the broadcasting service return button provided on the operation unit of the operation reception unit 474 (for example, a numeric button a channel change button) in step S21 shown in FIG. 25 (S21: YES), the operation input unit 414 proceeds to the process in step S22. Otherwise, the operation input unit 414 proceeds to the process in step S25.

In step S22, the operation input unit 414 generates a termination request command and provides the termination request command to the application control unit 434.

Then, the termination control unit 481 of the application control unit 434 acquires the termination request command provided from the operation input unit 414, and detects an application execution state from the application execution unit 435.

Then, in a case where the detected application execution state is the executing state in step S23 (S23: YES), the termination control unit 481 proceeds to the process in step S24. In a case where the detected application execution state is not the executing state (S23: NO), the termination control unit 481 terminates the process of the flowchart.

In step S24, the termination control unit 481 generates an application execution termination command and provides the application execution termination command to the application execution unit 435.

Then, upon acquiring the application execution termination command provided from the termination control unit 481, the application execution unit 435 terminates the execution of the currently running application, and terminates the process of the present flowchart.

On the other hand, in step S25, in accordance with an operation signal other than the activation request signal, the operation input unit 414 provides to the tuning unit 415, a code that specifies a medium or a channel, or provides to a sound adjustment circuit (not shown), a code that sets the volume.

The receiver 4 initiates operation in accordance with the operation signal other than the activation request signal, and terminates the process of the present flowchart.

Next, operation for the receiver 4 to execute and terminate an application based on a control from the cooperative communication/broadcasting service provider side is explained.

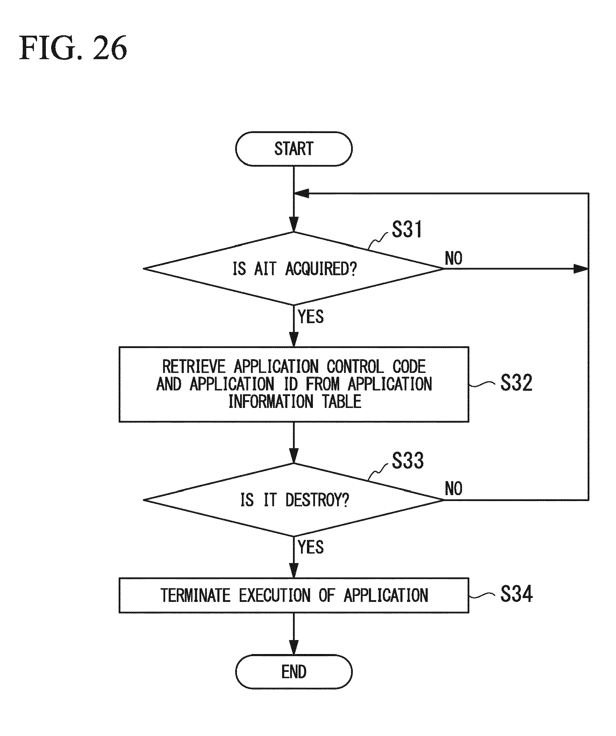

FIG. 26 is a flowchart illustrating an operational procedure of operation of the receiver 4.

First, in step S31, the application information acquiring unit 472 acquires the AIT provided from the demultiplexing unit 402.

In step S32, the application information acquiring unit 472 retrieves from the acquired AIT, an application control code and an application ID, and provides the application control code and the application ID to the termination control unit 481.

Then, the termination control unit 481 acquires the application control code and the application ID which are provided from the application information acquiring unit 472.

Then, in a case where the application control code is determined to be data indicating termination of execution of an application in step S33 (S33: YES), the termination control unit 481 proceeds to the process in step S34. In a case where the application control code is determined not to be data indicating termination of execution of an application in step S33 (S33: NO), the termination control unit 481 returns to the process in step S31.

Specifically, in a case where the application control code is determined to be "03 (hexadecimal number)" (identification name: DESTROY), the termination control unit 481 proceeds to the process in step S34. In a case where the application control code is determined not to be "03 (hexadecimal number)" (identification name: DESTROY), the termination control unit 481 returns to the process in step S31.

In step S34, the termination control unit 481 generates an application execution termination command including the application ID associated with the application control code, and provides the application execution termination command to the application execution unit 435.

Then, the application execution unit 435 acquires the application execution termination command provided from the termination control unit 481.

Then, upon acquiring the application execution termination command provided from the termination control unit 481, the application execution unit 435 terminates the executing of the currently running application and terminates the process of the present flowchart.

As explained above, the receiver 4 of one embodiment of the present invention receives the operation signal transmitted by the operation reception unit 474 in accordance with an operation of the viewer. The operation reception unit 474 is provided with the cooperative communication/broadcasting service button 475 that controls the receiver 4 to initiate a receipt of a cooperative communication/broadcasting service. By the cooperative communication/broadcasting service button 475 being pressed, the operation reception unit 474 transmits an activation request signal.

Upon acquiring the activation request signal, the receiver 4 acquires the AIT from the TS associated with the desired channel of the desired medium, and retrieves application information from that AIT (the application name, the application control code, and the location information).

In a case where the application control code is data indicating a stand-by of the application, the receiver 4 transmits an application request signal to the receiver application server 21 or the repository server 3 that is a destination of the request for the application file.

Upon receiving the application file provided from the destination of the request for the application, the receiver 4 acquires the application and initiates execution of the application.

To acquire content data required along with the execution of the application, the receiver 4 provides a content request signal to the content delivery server 16 or the content delivery server 23.

Upon receiving the content data provided from the destination of the request for the content data, the receiver 4 acquires and presents the content data.

According to this configuration, the receiver 4 can, in accordance with an operation by the viewer (operator) of the cooperative communication/broadcasting service button 475 provided on the operation reception unit 474, change the state of receiving a broadcasting service to the state of receiving a stream dependent service that is one of plurality of service types of cooperative communication/broadcasting services.

Therefore, according to the receiver 4, it is possible to change the broadcasting service to the cooperative communication/broadcasting service by a simple operation.

Additionally, the receiver 4 investigates the execution state of the application in a case where the operation signal provided from the operation reception unit 474 is an operation signal transmitted by an operation of the broadcasting service return button provided on the operation unit of the operation reception unit 474.

In a case where the application is in the executing state at the current point, the receiver 4 terminates the execution of the running application.

According to this configuration, the receiver 4 can, in accordance with an operation by the viewer (operator) of the numerical buttons or the channel change button provided on the operation reception unit 474, change the state of receiving a broadcasting service to the state of receiving a stream dependent service that is one of plurality of service types of cooperative communication/broadcasting services.

Therefore, according to the receiver 4, it is possible to change the broadcasting service to the cooperative communication/broadcasting service by a simple operation.

Additionally, in a case where the application control code included in the AIT acquired from the TS is determined to be data indicating termination of execution of the application, the receiver 4 terminates execution of the application indicated by the application ID associated with that application control code.

According to this configuration, the receiver 4 can change the currently-received cooperative communication/broadcasting service to a broadcasting service by a control from the cooperative communication/broadcasting service provider side.

Therefore, according to the receiver 4, it is possible to change the cooperative communication/broadcasting service received by the receiver side to a broadcasting service by a control from the cooperative communication/broadcasting service provider side.

Additionally, according to this configuration, the receiver 4 can, in accordance with a request from the receiver 4 itself, acquire from an external provider, an application to be executed by the receiver 4 and content data related to that application.

Further, in a case where the application control code included in the acquired AIT is determined to be data indicating auto-activation of an application, the activation control unit 473 of the receiver 4 transmits, regardless of an operation of the operation reception unit 474, an application request signal to the receiver application server 21.

Moreover, the present embodiment is an example in which in a case where the cooperative communication/broadcasting service button 475 provided on the operation reception unit 474 is pressed in the state of the receiver 4 receiving a broadcasting service, the state of receiving only a broadcasting service is changed to the state of receiving a cooperative communication/broadcasting service. Other than this, for example, a configuration may be made such that in a case where the cooperative communication/broadcasting service button 475 is pressed in the state of the receiver 4 receiving no service, such as in the stand-by state, the receiver 4 enters the state of receiving a broadcasting service from the stand-by state, and thereafter enters the state of receiving a cooperative communication/broadcasting service.

Additionally, the present embodiment is an example in which the application information acquiring unit 472 acquires an ES of the AIT multiplexed with the TS acquired from the broadcasting signal.

Other than this, a configuration may be made such that the broadcast sending device 11 transmits, as a broadcasting signal, a TS with which an EIT (event information table) provided with a descriptor including information concerning an AIT is multiplexed. Then, in the receiver 4 receiving that broadcasting signal, the demultiplexing unit 402 may retrieve the AIT from the EIT multiplexed with the TS, and the application information acquiring unit 472 may acquire that AIT.

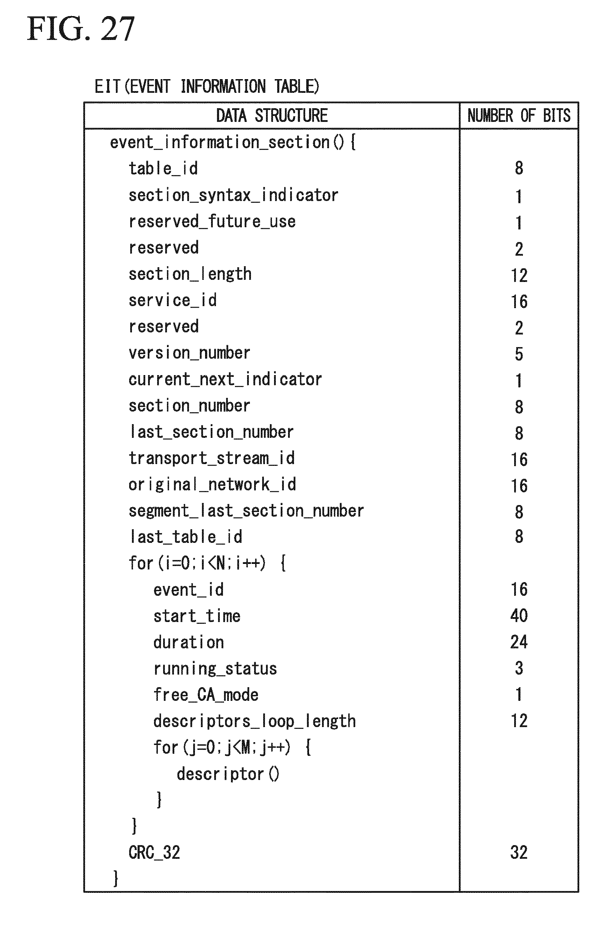

FIG. 27 is a diagram illustrating a data structure of the EIT.

Here, the details of the data structure of the EIT are described in, for example, "Operational Guidelines For Digital Terrestrial Television Broadcasting", ARIB TR-B 14, V4.4, Second Book, Association of Radio Industries and Businesses, March 2011 (Part 4, Sub-Part 3, 31.3).

The signal setting unit 112 of the broadcast sending device 11 stores the information concerning the AIT in, for example, a descriptor (descriptor()) of the EIT having the data structure shown in FIG. 27. Then, the signal setting unit 112 generates a TS with which the EIT storing the AIT is multiplexed, and provides that TS to the broadcast sending unit 113.

Alternatively, a configuration may be made such that the broadcast sending device 11 transmits the AIT described in BML (broadcast markup language) by data broadcasting in DSM-CC (digital storage media-command and control) data carousel transmission format. Then, in the receiver 4 acquiring that broadcasting signal, the demultiplexing unit 402 may retrieve the AIT from the data broadcasting content, and the application information acquiring unit 472 may acquire that AIT.

The details of the DSM-CC data carousel transmission format is described in, for example, "Data Coding And Transmission Specification For Digital Broadcasting", ARIB STD-B24, V5.1, Third Book, Association of Radio Industries and Businesses, March 2007 (Part 3, Chapter 6).

As explained above, the signal setting unit 112 fixes a component tag and a module that are for transmitting the AIT by carousel transmission. The signal setting unit 112 fixes the component tag to, for example, "AA (hexadecimal number)" and fixes a module ID that is identification information of the module to, for example, "0". Then, the signal setting unit 112 sets the type for identifying that the module is an AIT to a descriptor Type of the module.

On the other hand, the demultiplexing unit 402 monitors the module in the TS. Then, in a case where a module whose module ID is "0" is detected, the demultiplexing unit 402 retrieves from the detected module, the AIT associated with the identifier Type.

Alternatively, a configuration may be made such that an AIT associated with identification information of broadcasting content or an AIT including the identification information of the broadcasting content is stored in the notification sever 18 of the broadcasting station server group 12 or the notification server 24 of the service organization server group 2. Then, in the receiver 4 acquiring that broadcasting signal, the application control unit 434 may acquire the identification information of the content from the demultiplexing unit 402, and acquire the AIT from the notification server 18 or the notification server 24 via the communication input/output unit 411.

Additionally, to implement a function of changing the broadcasting service received on the receiver side to a cooperative communication/broadcasting service by a control from the cooperative communication/broadcasting service provider side, the following configuration may be included.

In other words, the application information acquiring unit 472 retrieves an application control code and a predetermined flag from the acquired AIT, and provides the application control code and the flag to the activation control unit 473. The predetermined flag is, for example, data provided in the AIT, which indicates any one of activation of an application and presentation of a data broadcast.

The activation control unit 473 acquires the application control code and the flag provided from the application information acquiring unit 472.

In a case where the application control code is determined to be data for instructing auto-activation of an application, the activation control unit 473 controls initiation of execution of the application or presentation of a data broadcast, in accordance with the flag.

The data for instructing the auto-activation of an application is, for example, "01 (hexadecimal number)" (identification name: AUTOSTART) of the application control code shown in the above table 7.

Here, each unit included in the receiver 4 of the above embodiments may be a unit that implements its function by executing a program for implementing the function of each unit. Additionally, each process included in the reception method of the above embodiments may be performed by executing a program for implementing each process.

Further, a program for implementing the function of each unit included in the receiver of the above embodiments or a program for implementing each process included in the reception method of the above embodiments may be recorded on a computer-readable recording medium. Then, the receiver or each process included in the reception method may be implemented by a computer system reading and executing the program recorded on the recording medium.

Here, a "computer system" includes an OS and hardware such as a peripheral equipment. Additionally, the "computer system" includes a function of providing information embodied in a so-called web page described in markup language and a function of displaying that information on a browser.

The "recording medium" means a storage device having a function of non-temporarily storing information. For example, the recording medium includes, but is not necessarily limited to, portable media like a flexible disk, a magneto-optical disk, a ROM, or a CD-ROM, and non-volatile media like unportable media such as a hard disk built in a computer system.

Additionally, the "recording medium" includes, but is not necessarily limited to, a volatile medium like a volatile memory, such as a DRAM or an SRAM, which is built in a computer system serving as a server or a client.

Further, the "recording medium" includes, but is not necessarily limited to, a medium that stores a program for a short time, such as a reception/transmission device or a transfer device which transmits a program via a network such as the Internet or via a communication line such as a telephone line.

Moreover, the aforementioned program may be a program which implements part of the aforementioned functions, or a program which can implement the aforementioned functions in combination of another program already recorded in the computer system.

Although the embodiments of the present invention have been explained above with reference to the drawings, the specific configuration is not limited to those embodiments, and design modifications made without departing from the scope of the present invention are also included.

INDUSTRIAL APPLICABILITY

The present invention is applicable to a receiver and a method for receiving digital broadcasts.

DESCRIPTION OF REFERENCE NUMERALS

    1: broadcasting organization device
    11: broadcast sending device
    111: broadcast related data management unit
    112: signal setting unit
    113: broadcast sending unit
    12: broadcasting station server group
    13: content management server
    14: program management server
    15: metadata management server
    16: content delivery server
    17: broadcasting station service server

18: notification server
2: service organization server group
21: receiver application server
22: service server
23: content delivery server
24: notification server
3: repository server
4: receiver
401: broadcast reception unit
402: demultiplexing unit
403: timer
404-1: first synchronization buffer
404-2: second synchronization buffer
405-1: first decoder
405-2: second decoder
406: data broadcast execution unit
407: video control unit
408: video display unit
409: sound control unit
410: sound output unit
411: communication input/output unit
412: application execution control unit
413: presentation control unit
414: operation input unit
415: tuning unit
416: local information storage unit
417: external I/F unit
431: application storage unit
432: application authentication unit
433: application management unit
434: application control unit
435: application execution unit
436: receiver API unit
437: terminal cooperation API unit
438: resource access control unit
439: resource control unit
451: policy data management unit
452: policy data storage unit
453: event interpretation unit
454: policy level comparing unit
455: event control unit
456: program policy storage unit
457: policy mediation unit
458: policy level storage unit
9: communication network
471: activation request signal acquiring unit
472: application information acquiring unit
473: activation control unit
474: operation reception unit
475: cooperative communication/broadcasting service button
481: termination control unit

**Claims**

1. A receiver comprising:

    an application information acquiring unit configured to acquire from data broadcasting content of a data broadcast repeatedly received, an application information table including an application control code for controlling a life cycle of an application for a cooperative communication/broadcasting service and location information of the application;

an application requesting unit configured to provide, based on the application control code acquired by the application information acquiring unit, an application request signal to an external application server associated with a location indicated by the location information;

an application acquiring unit configured to acquire an application transmitted from the application server based on the application request signal provided by the application requesting unit;

an application execution unit configured to execute the application acquired by the application acquiring unit;

a content requesting unit configured to provide, along with execution of the application by the application execution unit, a content request signal to an external content delivery server that stores content data associated with the application; and

a content acquiring unit configured to acquire the content data transmitted from the content delivery server based on the content request signal provided by the content requesting unit.

2. A receiver comprising:

an application information acquiring unit configured to acquire from an event information table included in a broadcast stream being received, an application information table including an application control code for controlling a life cycle of an application for a cooperative communication/broadcasting service and location information of the application;

an application requesting unit configured to provide, based on the application control code acquired by the application information acquiring unit, an application request signal to an external application server associated with a location indicated by the location information;

an application acquiring unit configured to acquire an application transmitted from the application server based on the application request signal provided by the application requesting unit;

an application execution unit configured to execute the application acquired by the application acquiring unit;

a content requesting unit configured to provide, along with execution of the application by the application execution unit, a content request signal to an external content delivery server that stores content data associated with the application; and

a content acquiring unit configured to acquire the content data transmitted from the content delivery server based on the content request signal provided by the content requesting unit.

3. A reception method comprising:

acquiring from data broadcasting content of a data broadcast repeatedly received, an application information table including an application control code for controlling a life cycle of an application for a cooperative communication/broadcasting service and location information of the application;

providing, based on the application control code, an application request signal to an external application server associated with a location indicated by the location information;

acquiring an application transmitted from the application server based on the application request signal;

executing the application;

providing, along with execution of the application, a content request signal to an external content delivery server that stores content data associated with the application; and

acquiring the content data transmitted from the content delivery server based on the content request signal.

4. A reception method comprising:

acquiring from an event information table included in a broadcast stream being received, an application information table including an application control code for controlling a life cycle of an application for a cooperative communication/broadcasting service and location information of the application;

providing, based on the application control code, an application request signal to an external application server associated with a location indicated by the location information;

acquiring an application transmitted from the application server based on the application request signal;

executing the application;

providing, along with execution of the application, a content request signal to an external content delivery server that stores content data associated with the application; and

acquiring the content data transmitted from the content delivery server based on the content request signal.

# FIG. 1

RECEIVER — 4

BROADCASTING SIGNAL → BROADCAST RECEPTION UNIT (401) → DEMULTIPLEXING UNIT (402)

TUNING UNIT — 415

OPERATION RECEPTION UNIT — 474

OPERATION INPUT UNIT — 414
ACTIVATION REQUEST SIGNAL ACQUIRING UNIT — 471

APPLICATION EXECUTION CONTROL UNIT — 412

APPLICATION CONTROL UNIT — 434
APPLICATION INFORMATION ACQUIRING UNIT — 472
ACTIVATION CONTROL UNIT — 473
TERMINATION CONTROL UNIT — 481

APPLICATION EXECUTION UNIT — 435
APPLICATION STORAGE UNIT — 431

COMMUNICATION INPUT/OUTPUT UNIT — 411

CONTENT DATA

APPLICATION REQUEST SIGNAL

APPLICATION FILE

CONTENT REQUEST SIGNAL

EP 2 712 186 A1

39

FIG. 2

BROADCASTING STATION

PROVIDE SERVICE

PROVIDE METADATA

SYSTEM MANAGER

AUTHENTICATE APPLICATION

RECEIVER

REGISTER AND APPROVE APPLICATION

PROVIDE SERVICE

SERVICE ORGANIZATION

# FIG. 3

BROADCASTING CONTENT AND COOPERATIVE
COMMUNICATION/BROADCASTING DATA FORMAT

APPROVAL

REPOSITORY

AUTHENTICATION

BROADCASTING
STATION FACILITY

## BROADCASTING STATION SERVER GROUP

CONTENT MANAGEMENT
SERVER

VIEWER MANAGEMENT
SERVER

CONTENT DELIVERY
SERVER

BROADCASTING STATION
SERVICE SERVER

API

SECURITY

DB — USER CONTENT RELATED DATA

## SERVICE ORGANIZATION SERVER GROUP

RECEIVER APPLICATION
SERVER

DL

SERVICE SERVER

CONTENT DELIVERY
SERVER

API

DB — USER CONTENT SERVICE DATA

## RECEIVER

APPLICATION

API

COOPERATIVE COMMUNICATION
/BROADCASTING FUNCTION
·APPLICATION CONTROL
·DISPLAY CONTROL
·SYNCHRONIZATION
·SECURITY

BASIC FUNCTION

CONTENT AND
TRANSPORT FORMAT

EP 2 712 186 A1

# FIG. 4

APPLICATION FOR COOPERATIVE
COMMUNICATION/BROADCASTING SERVICE

RECEIVER API

TERMINAL
COOPERATION API
PROVISION PROCESS
(DEMON)

TERMINAL
COOPERATION
API

REMOTE CONTROL, ACQUISITION
OF RECEIVER INFORMATION, etc

HOME NETWORK
(LAN)

OTHER DEVICE
APPLICATION

REMOTE CONTROL, COOPERATION,
NOTIFICATION (PUSH NOTIFICATION), etc

INTERNET

OTHER DEVICE
APPLICATION, SERVER

RECEIVER RESOURCE,
BROADCAST RESORUCE, (SI INFORMATION, SYNCHRONIZATION), PLAYBACK
CONTROL, USER INFORMATION, AUTHENTICATION, etc

RECEIVER FUNCTION

EP 2 712 186 A1

FIG. 5

STREAM DEPENDANT SERVICE

·AV STREAM
 (IMAGE SOUND+CAPTION+DATA BROADCAST)

+

·COOPERATIVE COMMUNICATION/BROADCASTING
 SERVICE APPLICATION (COOPERATION)

INDEPENDENT SERVICE

·COOPERATIVE COMMUNICATION/BROADCASTING
 SERVICE APPLICATION (NON-COOPERATION)

# FIG. 6

```xml
<?xml version="1.0" encoding="utf-8"?>
<mhp:ServiceDiscovery xmlns:mhp="urn:dvb:mhp:2009"
            xmlns:ipi="urn:dvb:metadata:iptv:sdns:1008-1"
            xmlns:mpeg7="urn:tva:mpeg7:2005"
            xmlns:xsi="http://www.w3.org/2001/XMLSchema-instance">
  <mhp:ApplicationDiscovery>
    <mhp:ApplicationList>
      <mhp:Application>
        <mhp:appName ipi:Language="eng">SyncPlayerSample</mhp:appName>
        <mhp:applicationIdentifier>
          <mhp:orgId>100</mhp:orgId>
          <mhp:appId>200</mhp:appId>
        </mhp:applicationIdentifier>
        <mhp:applicationDescriptor>
          <mhp:controlCode mhp:type="ARIB-J">AUTOSTART</mhp:controlCode>
          <mhp:visibility>VISIBLE_ALL</mhp:visibility>
          <mhp:serviceBound>false</mhp:serviceBound>
          <mhp:priority>0</mhp:priority>
          <mhp:version>0</mhp:version>
          <mhp:mhpVersion>
            <mhp:profile>0</mhp:profile>
            <mhp:versionMajor>0</mhp:versionMajor>
            <mhp:versionMinor>0</mhp:versionMinor>
            <mhp:versionMicro>0</mhp:versionMicro>
          </mhp:mhpVersion>
        </mhp:applicationDescriptor>
        <mhp:applicationSpecificDescriptor>
          <mhp:dvbjDescriptor>
            <mhp:location>http://192.168.11.37/SyncDemo.jar</mhp:location>
            <mhp:applicationStructure>
              <mhp:classPathExtension/>
              <mhp:initialClass>demo.SyncPlayerDemo</mhp:initialClass>
            </mhp:applicationStructure>
          </mhp:dvbjDescriptor>
        </mhp:applicationSpecificDescriptor>
      </mhp:Application>
    </mhp:ApplicationList>
  </mhp:ApplicationDiscovery>
</mhp:ServiceDiscovery>
```

FIG. 7

```
        ┌──────────────────┐
        │  AFTER LOADING   │
        └────────┬─────────┘
                 │        InitApp()
                 ▼
        ┌──────────────────┐
        │      PAUSE       │──────────────┐
        └───┬──────▲───────┘              │
            │      │                      │
 startApp() │      │ pauseApp()           │
            ▼      │                      ▼             ┌──────────┐
        ┌──────────────────┐   destroyApp()     ───────▶│ DESTROY  │
        │      START       │──────────────┘             └──────────┘
        └──────────────────┘
```

# FIG. 8

BROADCASTING STATION

INFORMATION ADDED TO BROADCASTING SIGNAL

CREATE FOR EACH SERVICE

BROADCASTING STATION SERVER GROUP

CONTENT MANAGEMENT DELIVERY SERVER

BROADCASTING STATION SERVICE SERVER

SECURITY

API

BROADCASTING CONTENT

APPLICATION

REQUEST/DOWNLOAD

CONTENT AND TRANSPORT FORMAT

RECEIVER

INTERNET

EXCLUSIVE LINE

B to B DATA FORMAT

COOPERATIVE COMMUNICATION /BROADCASTING BASE SERVER

AUTHENTICATION

CONTROL INFORMATION
(e.g. :Notification,etc)

TERMINAL COOPERATION FUNCTION

APPLICATION  STB

API(USE RECEIVER FUNCTION)

BASIC FUNCTION

SYNCHRONIZATION

APPLICATION MANAGEMENT

INTERNET

SERVER FOR EACH SERVICE
(e.g. :TRANSLATION OF CAPTION)
(e.g. :GENERATION OF RECOMMENDATION)

REQUEST/DOWNLOAD

CONTENT AND TRANSPORT FORMAT

APPLICATION

PC

APPLICATION

MOBILE TERMINAL

SECURITY

APPLICATION | APPLICATION | APPLICATION
MANAGEMENT AND DELIVERY OF APPLICATION

SERVICE ORGANIZATION SERVER GROUP

THIRD PARTY

INTERNET

EP 2 712 186 A1

FIG. 9

FIG. 10

| BROADCASTING SERVER INTERFACE UNIT | SERVICE ORGANIZATION SERVER GROUP | RECEIVER |

REQUEST

REQUEST

RECOMMENDED PROGRAM, OTHERS

APPLICATION, DATA, OTHERS

# FIG. 11

| HTML BROWSER | STREAMING RECEPTION/PLAYBACK FUNCTION | | | | | | |
|---|---|---|---|---|---|---|---|

| HTML CONTENT | PLAYBACK CONTROL METAFILE | IMAGE DATA | SOUND DATA | CAPTION DATA | ERROR CORRECTION FORMAT | RTSP | DRM PROTOCOL |
| | | MULTIPLEXING FORMAT (TTS) | | | | | |
| | PLAYBACK CONTROL METAFILE TRANSMISSION PROVISION | IMAGE DATA TRANSMISSION PROVISION | IMAGE DATA TRANSMISSION PROVISION | ERROR CORRECTION TRANSMISSION PROVISION | | | |
| | HTTP | | RTP | | | | |

| TCP/UDP |
|---|

| IP (v4/v6) |
|---|

EP 2 712 186 A1

# FIG. 12

RECEIVER                                            SECURE
                                                    MANAGER

·AUTHENTICATION OF APPLICATION
 :VERIFICATION OF SIGNATURE
·PRESENTATION CONTROL
 :CONTROL INFORMATION AND ID

BROADCASTING
ORGANIZATION
— BROADCAST PROGRAM —
— APPLICATION CONTROL INFORMATION —

DATA (CONTENT)

GENERAL APPLICATION

A APPLICATION

SERVICE PROVIDER → APPLICATION SERVER

APPLICATION SERVER

DATA (CONTENT)

SECURE MINIMUM CONTROL EXPECTED
BY BROADCASTING ORGANIZATION
⇒GIVE ID AND SIGNATURE

SIGNATURE ID

SERVICE PROVIDER

REGISTER
APPLICATION

APPLICATION
REGISTRATION MANAGER
(THIRD PARTY AUTHORITY)

EP 2 712 186 A1

# FIG. 13

**RECEIVER**

**BROADCAST RESOURCE**
- IMAGE
- SOUND
- CAPTION
- PSI/SI

**COMMUNICATION RESOURCE**
- TCP
- UDP

GENERAL APPLICATION

A APPLICATION

**SECURE MANAGER**

**APPLICATION MONITORING AND CONTROL FUNCTION**
- APPLICATION AUTHENTICATION
- WINDOW PRESENTATION CONTROL
- RESOURCE ACCESS CONTROL
- REVOCATION

**RECEIVER PROTECTION FUNCTION**
- USER INFORMATION PROTECTION
- ANTIVIRUS etc

**RECEIVER RESOURCE**
- IMAGE AND SOUND OUTPUT PROCESS
- TUNING PROCESS
- MEMORY
- STORAGE

RESOURCE MANAGEMENT

EP 2 712 186 A1

# FIG. 14

EMERGENCY
EARTHQUAKE REPORT

TODAY'S NEWS  WE HAD FIRST SNOW AT TOKYO.···

APPLICATION

RECEIVER

2  |  1

PRESENTATION CONTROL SIGNAL
(PRESENTATION POLICY)

APPLICATION SERVER

INTERNET

| POLICY LEVEL | SIMULTANEOUS DISPLAY | | Overlay | | SCHEDULED EVENT,PROGRAM  (EXAMPLE) |
|---|---|---|---|---|---|
| | BROADCASTING | COMMUNICATION | BROADCASTING | COMMUNICATION | |
| 4 | × | × | × | × | EMERGENCY ALERT BROADCAST,  EMERGENCY EARTHQUAKE REPORT |
| 3 | O | O | × | × | BREAKING NEWS,  CAMPAIGN BROACAST,  ELECTION BROADCAST |
| 2 | O | O | O | × | NEWS |
| 1 | O | O | O | O | OTHERS  (SPORTS,  VARIERY,  etc) |

PRESENTATION RULE

EP 2 712 186 A1

# FIG. 15

EP 2 712 186 A1

| PRESENTATION LEVEL | METHOD OF PRESENTING COMMUNICATION CONTENT |
|---|---|
| 3 | PRESENTATION PROHIBITED |
| 2 | PRESENTATION OUSIDE BROADCAST WINDOW ALLOWED |
| 1 | PRESENTATION ON BROADCAST WINDOW ALLOWED |

EXAMPLE OF PRESENTATION RULE

# FIG. 16

| PROGRAM ORGANIZATION OF DIGITAL BROADCAST WORLD | POLICY LEVEL | WINDOW DISPLAY FOR COOPERATIVE COMMUNICATION/BROADCASTING SERVICE |

# FIG. 17

POLICY LEVEL

A APPLICATION

GREEN:XXXXX
GLUE:XXXXX
RICK:XXXXX

RECOMMENDED
XXXXXXX    XXXXXXXX
XXXXXXX    XXXXXXXX

GENERAL APPLICATION

1

PROGRAM A

RECEPTION OF EMERGENCY EARTHQUAKE REPORT

4

EMERGENCY EARTHQUAKE REPORT

EMERGENCY EARTHQUAKE REPORT (WEATHER BUREAU)

EARTHQUAKE AT KUSHIRO BAY
BEWARE OF STRONG EARTHQUAKE
SOUTH HOKKAIDO EAST HOKKAIDO
CENTER HOKKAIDO NORTH HOKKAIDO AOMORI

ALL APPLICATIONS ARE
OUTSIDE BROADCAST WINDOW

GREEN:XXXXX
GLUE:XXXXX
RICK:XXXXX

RECOMMENDED
XXXXXXX    XXXXXXXX
XXXXXXX    XXXXXXXX

TIME

# FIG. 18

FIG. 19

EP 2 712 186 A1

FIG. 20

VIDEO CONTROL UNIT — 407

SOUND CONTROL UNIT — 409

APPLICATION EXECUTION CONTROL UNIT — 412

APPLICATION EXECUTION UNIT — 435

RESOURCE CONTROL UNIT — 439

ANOTHER FUNCTIONAL UNIT

EXTERNAL I/F UNIT — 417

RECEIVER API UNIT — 436

TERMINAL COOPERATION API UNIT — 437

PRESENTATION CONTROL UNIT — 413

DATA BROADCAST EXECUTION UNIT — 406

APPLICATION CONTROL UNIT — 434

RESOURCE ACCESS CONTROL UNIT — 438

DEMULTIPLEXING UNIT — 402

APPLICATION STORAGE UNIT — 431

COMMUNICATION INPUT/OUTPUT UNIT — 411

APPLICATION MANAGEMENT UNIT — 433

APPLICATION AUTHENTICATION UNIT — 432

EP 2 712 186 A1

FIG. 21

# FIG. 22

# FIG. 23

RECEIVER APPLICATION SERVER 21     RECEIVER 4     CONTENT DELIVERY SERVER 23

ACQUIRE APPLICATION INFORMATION TABLE — S1

S2

READ APPLICATION FILE — S3

S4

INITIATE EXECUTION OF APPLICATION — S5

S6

READ CONTENT DATA — S7

S8

PRESENT CONTENT — S9

EP 2 712 186 A1

FIG. 24

START

S11
IS
OPERATION SIGNAL
RECEIVED?
NO

YES

S12
IS
IT ACTIVATION REQUEST
SIGNAL?
NO

YES

ACQUIRE APPLICATION INFORMATION TABLE — S13

1

RETRIEVE APPLICATION INFORMATION
FROM APPLICATION INFORMATION TABLE — S14

S15
IS IT PRESENT?
NO

YES

TRANSMIT APPLICATION REQUEST SIGNAL — S16

S17
IS APPLICATION RECEIVED?
NO

YES

STORE APPLICATION — S18

EXECUTE APPLICATION — S19

END

EP 2 712 186 A1

## FIG. 25

Flowchart:

1 → S21: IS IT REQUEST FOR RETURN TO BROADCASTING SERVICE?

- NO → S25: INITIATE EXECUTION OF PREDETERMINED PROCESS
- YES → S22: ACQUIRE APPLICATION EXECUTION STATE

S23: IS APPLICATION BEING EXECUTED?

- NO → END
- YES → S24: TERMINATE EXECUTION OF APPLICATION → END

FIG. 26

```
                        ┌──────────────┐
                        │    START     │
                        └──────────────┘
                               │
                               │         ┌──────────────────────┐
                               ▼    S31  │                      │
                          ╱─────────╲    │                      │
                         ╱           ╲   │                      │
                        ╱ IS AIT      ╲ NO                      │
                        ╲ ACQUIRED?   ╱──────────────────────►  │
                         ╲           ╱                          │
                          ╲─────────╱                           │
                               │ YES                            │
                               ▼                                │
              ┌────────────────────────────────┐               │
              │ RETRIEVE APPLICATION CONTROL    │  S32          │
              │ CODE AND APPLICATION ID FROM    │               │
              │ APPLICATION INFORMATION TABLE   │               │
              └────────────────────────────────┘               │
                               │                                │
                               ▼    S33                         │
                          ╱─────────╲                           │
                         ╱           ╲  NO                      │
                        ╱ IS IT       ╲────────────────────────┘
                        ╲ DESTROY?    ╱
                         ╲           ╱
                          ╲─────────╱
                               │ YES
                               ▼
              ┌────────────────────────────────┐
              │ TERMINATE EXECUTION OF          │  S34
              │ APPLICATION                     │
              └────────────────────────────────┘
                               │
                               ▼
                        ┌──────────────┐
                        │     END      │
                        └──────────────┘
```

# FIG. 27

EIT (EVENT INFORMATION TABLE)

| DATA STRUCTURE | NUMBER OF BITS |
|---|---|
| event_information_section () { | |
|   table_id | 8 |
|   section_syntax_indicator | 1 |
|   reserved_future_use | 1 |
|   reserved | 2 |
|   section_length | 12 |
|   service_id | 16 |
|   reserved | 2 |
|   version_number | 5 |
|   current_next_indicator | 1 |
|   section_number | 8 |
|   last_section_number | 8 |
|   transport_stream_id | 16 |
|   original_network_id | 16 |
|   segment_last_section_number | 8 |
|   last_table_id | 8 |
|   for (i=0; i<N; i++) { | |
|     event_id | 16 |
|     start_time | 40 |
|     duration | 24 |
|     running_status | 3 |
|     free_CA_mode | 1 |
|     descriptors_loop_length | 12 |
|     for (j=0; j<M; j++) { | |
|       descriptor () | |
|     } | |
|   } | |
|   CRC_32 | 32 |
| } | |

## INTERNATIONAL SEARCH REPORT

| | International application No. |
|---|---|
| | PCT/JP2012/062811 |

**A. CLASSIFICATION OF SUBJECT MATTER**
*H04N7/173*(2011.01)i, *H04B1/16*(2006.01)i

According to International Patent Classification (IPC) or to both national classification and IPC

**B. FIELDS SEARCHED**

Minimum documentation searched (classification system followed by classification symbols)
H04N7/173, H04B1/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2005/076125 A1 (Matsushita Electric Industrial Co., Ltd.), 18 August 2005 (18.08.2005), paragraphs [0110] to [0117], [0336] & CA 2556092 A        & KR 10-2006-0135662 A & CN 1918544 A | 1-4 |
| Y | JP 2010-525616 A (Panasonic Corp.), 22 July 2010 (22.07.2010), paragraphs [0226] to [0229] & JP 2010-524271 A        & US 2008/0250101 A1 & US 2008/0250461 A1        & WO 2008/126405 A2 & WO 2008/129858 A2        & CA 2680382 A & CA 2680399 A        & KR 10-2009-0122984 A & KR 10-2010-0015356 A  & MX 2009009548 A & MX 2009009547 A | 1-4 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 June, 2012 (12.06.12) | 19 June, 2012 (19.06.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011112490 A

- JP 2011112491 A

**Non-patent literature cited in the description**

- APPLICATION EXCECUTION ENGINE PLATFORM FOR DIGITAL BROADCASTING. *ARIB STD-B23, V1.2, Application of Radio Industries and Business-es,* July 2009